(19) Europäisches Patentamt
European Patent Office
Office européen des brevets

(11) Publication number: 0 294 461 B1

# (12) EUROPEAN PATENT SPECIFICATION

(45) Date of publication of patent specification: 23.10.91 Bulletin 91/43

(51) Int. Cl.⁵: G03C 1/83, C09B 23/02, C09B 23/10, C09B 23/14, C09B 29/00

(21) Application number: 88900658.1

(22) Date of filing: 23.12.87

(86) International application number: PCT/US87/03393

(87) International publication number: WO 88/04794 30.06.88 Gazette 88/14

## (54) SOLID PARTICLE DISPERSION FILTER DYES FOR PHOTOGRAPHIC COMPOSITIONS.

(30) Priority: 23.12.86 US 945634
13.07.87 US 73256
13.07.87 US 73257
05.10.87 US 104468
19.11.87 US 122829

(43) Date of publication of application: 14.12.88 Bulletin 88/50

(45) Publication of the grant of the patent: 23.10.91 Bulletin 91/43

(84) Designated Contracting States: BE CH DE FR GB IT LI NL

(56) References cited:
DE-A- 409 282
DE-A- 2 262 794
FR-A- 2 124 565
FR-A- 2 338 513
GB-A- 500 795
GB-A- 511 690
US-A- 2 527 583
US-A- 2 538 009
US-A- 4 092 168
US-A- 4 276 373
US-A- 4 294 916
US-A- 4 294 917
US-A- 4 420 555
Patent Abstracts of Japan, vol. 11, no. 35 (P-542)(2482), 03.02.87, & JP-A-61205934, 12.09.86

(73) Proprietor: EASTMAN KODAK COMPANY (a New Jersey corporation)
343 State Street
Rochester New York 14650 (US)

(72) Inventor: DIEHL, Donald, Richard
27 Crestwood Drive
Rochester, NY 14624 (US)
Inventor: FACTOR, Ronda, Ellen
260 Applewood Drive
Rochester, NY 14612 (US)
Inventor: DICKERSON, Robert, Edward
367 Cadillac Avenue
Rochester, NY 14606 (US)
Inventor: KELLY, James, Edward
14 Saddlebrook
Pittsford, NY 14534 (US)
Inventor: SHUTTLEWORTH, Leslie
303 Maidstone Drive
Webster, NY 14580 (US)
Inventor: MERKEL, Paul, Barrett
525 Westfield Street
Rochester, NY 14619 (US)

(74) Representative: Brandes, Jürgen, Dr.Rer.Nat. et al
Wuesthoff & Wuesthoff, Patent- und Rechtsanwälte, Schweigerstrasse 2
W-8000 München 90 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Jouve, 18, rue Saint-Denis, 75001 PARIS

## Description

Field of the Invention

This invention relates to dyes, particularly dyes useful as filter dyes, especially in photographic compositions and elements.

Background of the Invention

Photographic materials often contain filter dyes to absorb light from different regions of the spectrum, such as red, blue, green, ultraviolet, and infrared, to name a few. These filter dyes are often required to perform the function of absorbing light during exposure of the material so as to prevent or at least inhibit light of a region of the spectrum from reaching at least one of the radiation-sensitive layers of the element.

After processing of the element, however, the continued presence of the filter dye will adversely affect the image quality of the photographic material. It is therefore desirable to use filter dyes that will be solubilized and removed or at least decolorized during photographic processing. Dyes that are easily solubilized, however, tend to wander throughout the photographic material during coating, adversely affecting the final image quality.

To prevent dye wandering, the dyes are often coated with a mordant to bind the dye in the layer in which it is coated. Dye mordants, while often useful, tend to either bind the dye too strongly, inhibiting removal of the dye during photographic processing, or too weakly, thus not preventing dye wandering.

Lemahieu et al describe in U.S. Patent 4,092,168 a combination of specific monomethine oxonol and pentamethine oxonol dyes useful as antihalation dyes. The dyes are insoluble at coating pH's, thus eliminating the need for a dye mordant, and are soluble for removal and/or decolorization at processing pH's. These dyes are disclosed as being dispersible as solid particles in aqueous hydrophilic colloid compositions; however, no suggestion is given that any other dyes might possess the same beneficial solubility properties. The reference discusses the absorbance properties of the dyes and their suitability for antihalation use, but no teaching whatsoever is presented as to what other dyes might possess the beneficial solubility properties of being aqueous-insoluble at coating pH's and highly aqueous-soluble at processing pH's. There is also no teaching that would enable anyone as to how to choose dyes other than those specifically disclosed in the U.S. Patent 4,092,168 to obtain those properties.

Kreuger et al describe in U.S. Patent 4,420,555 specific yellow filter dyes for incorporation into film-forming polymeric binders in photographic elements. The dyes are preferably incorporated in the binders in loaded polymeric latexes. These dyes are disclosed as being removable and/or decolorizable during photographic processing. The dyes are not disclosed as being coatable as solid particle dispersions and, as with U.S. Patent 4,092,168, there is no teaching or suggestion that any dyes other than those specifically disclosed (or, for that matter, even the dyes disclosed therein) might possess the beneficial concomitant advantages of being aqueous-insoluble at coating pH's and aqueous-soluble at processing pH's.

U. S. Patent 2,257,583 decribes sulfophenyl- and carboxyphenyl-substituted pyrazolone mesocyanine dyes, but only the sufophenyl-substituted dyes are actually used in the Examples for incorporation into photographic layers. These water-soluble dyes are incorporated into the gelatin layers with the aid of a polymer mordant. No solid particle dispersions are described or suggested. DE-A-409 282 describes derivatives of p-aminoazobenzene-o-carboxylic acid as dyestuffs; however, no teaching or suggestion is made regarding solid particle dispersions of dyes for layers of photographic materials. FR-A-2 124 565 sulfophenyl- and carboxyphenyl-substituted pyrazolone oxonol, but only the sulfophenyl-substituted dyes are actually used in the Examples for incorportion into photographic layers. As indicated, for example, at Col. 7, lines 32-35 of the corresponding U.S. Patent 3,746,539, these dyes are incorporated into gelatin layers of photographic materials as aqueous solutions.

The abstract of JP 61/205934 describes a sulfonamidophenyl-substituted benzoylacetonitrile arylidene photographic filter dye. No mention is made of how this dye is incorporated into photographic materials. U. S. Patents 2,538,009 and 4,420,555 describe similar dyes as photographic filter dyes. These dyes are incorporated in photographic layers as solutions in organic solvents along with polymers or with the use of a latex polymer.

U.S. Patents 4,294,916 and 4,294,917 describe solid particle dispersions of carboxy- and carboxyphenyl-substituted filter dyes for photographic materials. No teaching or suggestion is made that any other types of dyes could be incorporated into photographic materials as solid particle dispersions.

Prior to the present invention, there has been a lack of recognition in the prior art that there might exist a broad class of dyes having a specific set of properties that allow them to be prepared and incorporated into photographic compositions and elements as solid particle dispersions that are aqueous-insoluble at coating

pH's and aqueous-soluble at photographic processing pH's. It would, of course, be highly desirable to provide a broad class of filter dyes for use in photographic elements that do not wander during coating, are fully solubilized during processing, and do not require a mordant.

It has now been discovered that a broad class of dyes, where the dye and its substituents are chosen so as to meet a specific combination of solubility criteria for both acid/base and nonpolar/polar systems, can be prepared as solid particle dispersions having the above-described beneficial solubility properties.

Summary of the Invention

These solid particle dispersions are dyes of the formula:

$$\text{(I)} \quad [D\text{-}(A)_y]\text{-}X_n$$

where D is a chromophoric light-absorbing moiety, which comprises an aromatic ring when y is 0, and which may or may not comprise an aromatic ring when y is not 0; A is an aromatic ring bonded directly or indirectly to D, X is a sulfonamido group either on A or on an aromatic ring portion of D, with an ionizable proton that causes the dye to exhibit pKa of 4 to 11 in a 50/50 mixture on a volume basis of ethanol and water, y is 0 to 4, and n is 1 to 7. The dyes also have a log partition coefficient of from 0 to 6 when in nonionized form. These dyes are substantially aqueous insoluble at a pH of 6 or below and substantially aqueous soluble at a pH of 8 or above.

The dye dispersions of the invention are coatable in hydrophilic vehicle (e.g., gelatin) layers of photographic elements, and do not require a mordant to prevent them from wandering at the normal coating pH's of 6 or below (usually 4 to 6). At the normal photographic processing pH's of 8 and above (usually 8 to 12), however, the dye dispersions are highly soluble, allowing them to be easily removed and/or decolorized.

Detailed Description of the Invention

The chromophoric light-absorbing moiety D, of formula (I) can be based on any of a number of well-known dye compounds. These include cyanines, merocyanines, oxonols, arylidenes (i.e., merostyryls), anthraquinones, triphenylmethanes, azo dye types, azomethines, and others. The specific dye used is not critical, as long as all the criteria of formula (I) are met. These dyes are commonly used in the photographic art, and are more fully described in James, The Theory of the Photographic Process, 4th, Macmillan, New York (1977) and Hamer, The Cyanine Dyes and Related Compounds, Interscience (1964).

The cyanine dyes include, joined by a methine linkage, two basic heterocyclic nuclei, such as those derived from quinolinium, pyridinium, isoquinolinium, 3H-indolium, benz[e]indolium, oxazolium, thiazolium, selenazolinium, imidazolium, benzoxazolinium, benzothiazolium, benzoselenazolium, benzimidazolium, naphthoxazolium, naphthothiazolium, naphthoselenazolium, thiazolinium dihydronaphthothiazolium, pyrylium, and imidazopyrazinium quaternary salts.

The merocyanine dyes include, joined by a methine linkage, a basic heterocyclic nucleus of the cyanine dye type and an acidic nucleus, such as can be derived from barbituric acid, 2-thiobarbituric acid, rhodanine, hydantoin, 2-thiohydantoin, 4-thiohydantoin, 2-pyrazolin-5-one, 2-isoxazolin-5-one, indan-1,3-dione, cyclohexan-1,3-dione, 1,3-dioxan-4,6-dione, pyrazolin-3,5-dione, pentan-2,4-dione, alkylsulfonyl acetonitrile, malononitrile, isoquinolin-4-one, and chroman-2,4-dione.

The oxonol dyes include, joined by a methine or bridged methine linkage, two acidic carbo- or heterocyclic nuclei, such as those described above for merocyanine dyes, with the exclusion of 2-pyrazolin-5-one.

The arylidene dyes include, joined by a methine or bridged methine linkage, an acidic nucleus as described previously and an aryl group, substituted with electron-donating substituents, such as alkyl- or dialkylamino, methoxy, and the like.

The anthraquinone dyes include those compounds derived from the anthraquinone nucleus and substituted with electron donating or electron withdrawing groups so as to extend the chromophoric nature of the compound.

The triphenylmethane dyes include those compounds with three aryl groups joined to a single methine linkage and substituted with suitable electron-donating or electron-withdrawing substituents so as to produce an extended chromophoric system.

The azo dyes include any of a large class of compounds with two nitrogens in the linkage between multiply-substituted aryl groups, as is known in the art.

The azomethine dyes include, joined by a single nitrogen in the unsaturated linkage, an acidic nucleus as described previously for the merocyanine dyes, and an aryl group substituted with electron-donating substituents such as alkyl- or dialkylamino, methoxy, and the like.

All the above-described chromophoric light-absorbing compounds are well-known in the art Additional

examples of these and other dye classes suitable for use in this invention are disclosed in the Colour Index 3d, The Society of Dyers and Colourists, Great Britain (1971).

The aromatic ring (A or an aromatic ring, to which X is attached, that is part of D) of formula (I) can be any aromatic ring capable of bonding with D and X in a manner such that the proper pKa and log P are achieved. Examples of such rings include phenyl, naphthyl, anthracenyl, pyridyl, acenaphthyl, dihydronaphthyl, and pyrimidyl. The aromatic ring A, if present, may be bonded directly to D or indirectly (i.e., through a divalent linking group, such as alkyl, as is known in the art) to D.

The sulfonamido group X, of formula (I) having an ionizable proton with a pKa in a 50/50 mixture (volume basis) of ethanol and water of from 4 to 11, when attached to the aromatic ring of formula (I), can be easily chosen by one skilled in the art. Especially preferred substituents are $NHSO_2R$ where R is a substituted or unsubstituted alkyl group of from 1 to 6 carbon atoms.

The pKa of the compounds of formula (I) in a 50/50 mixture (volume basis) of ethanol and water is preferably from 4 to 11. The pKa parameter is a well-known measurement of the dissociation constant of an ionizable compound in aqueous environments. It is discussed in most basic chemistry texts and does not require further explanation here. The log partition coefficient (log P) of the unionized (i.e., neutral) compounds of formula (I) is preferably from 0 to 6. The log P parameter is a well-known measurement of the solubility of a compound in aqueous liquids compared to its solubility in nonpolar organic solvents. The log P parameter is further described, along with log P data for organic compounds, in C. Hansch & T. Fujita, J. Am. Chem. Soc., 86, 1616-25 (1964) and A. Leo & C. Hansch, Substituent Constants for Correlation Analysis in Chemistry and Biology, Wiley, New York (1979).

Examples of compounds according to formula (I) and carboxy-substituted analogs are presented in the following Tables. Except where stated otherwise, absorbance data are given for the dye in methanol.

## Table I

### Pyrazolone Cinnamylidene Dyes

General Structure:

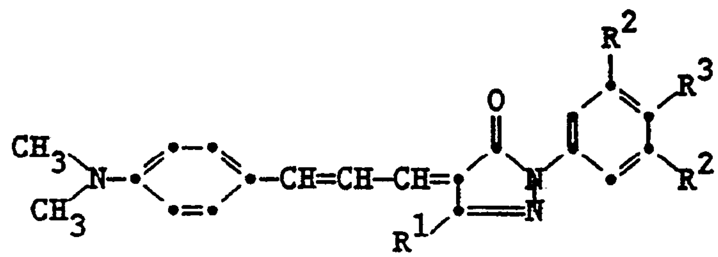

| Dye | $R^1$ | $R^2$ | $R^3$ | λ-max (methanol) | ε-max (x $10^4$) |
|---|---|---|---|---|---|
| 1 | $CH_3$ | H | $CO_2H$ | 516 | 4.62 |
| 2 | $CH_3CO$ | H | $CO_2H$ | 573 | 5.56 |
| 3 | $CO_2Et$ | H | $CO_2H$ | 576 | 5.76 |
| 4 | $CH_3$ | $CO_2H$ | H | 506 | 3.90 |
| 5 | $CO_2Et$ | $CO_2H$ | H | 560 | 5.25 |

## Table II

Benzoylacetonitrile Merocyanines

General Structure:

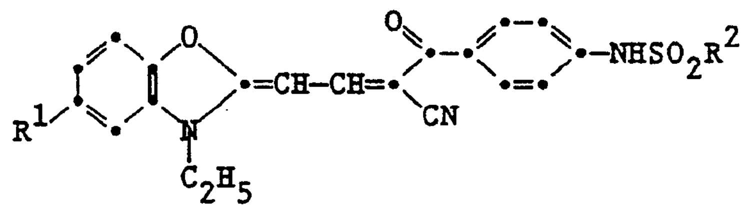

| Dye | $R^1$ | $R^2$ | λ-max (methanol) | ε-max (x $10^4$) |
|---|---|---|---|---|
| 6 | $n-C_6H_{13}SO_2NH$ | $CH_3$ | 445 | 7.32 |
| 7 | $CH_3SO_2NH$ | $C_3H_7$ | 446 | 7.86 |
| 8 | $CH_3SO_2NH$ | $n-C_6H_{13}$ | 447 | 7.6 |
| 9 | H | $CH_3$ | 449 | 6.5 |

## Table II-A

Arylidene Dyes

General Structure:

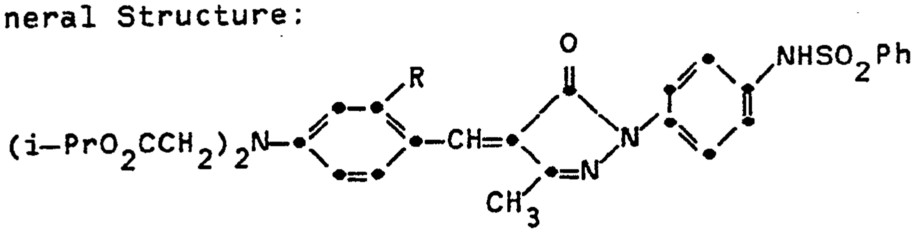

| Dye | R | λ-max (methanol) | ε-max (x $10^4$) |
|---|---|---|---|
| 10 | H | 424 | 3.98 |
| 11 | $CH_3$ | 423 | 3.86 |

## Table III

General Structure:

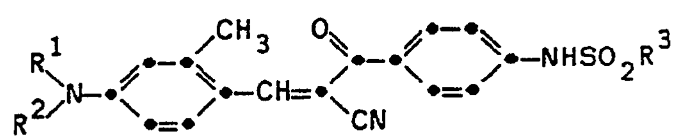

| Dye | $R^1$ | $R^2$ | $R^3$ | λ-max (methanol) | ε-max (x $10^4$) |
|---|---|---|---|---|---|
| 12 | $i\text{-}PrO_2CCH_2$ | $i\text{-}PrO_2CCH_2$ | $C_3H_7$ | 426 | 3.5 |
| 13 | $C_2H_5$ | $CF_3CH_2O_2CCH_2$ | $CH_3$ | 439 | 4.27 |
| 14 | $i\text{-}PrO_2CCH_2$ | $i\text{-}PrO_2CCH_3$ | $CH_3$ | 420 | 4.2 |
| 15 | $C_2H_5$ | $CF_3CH_2O_2CCH_2$ | $C_3H_7$ | 430 | 4.25 |

## Table IV
Pyrazolone Merocyanines

General Structure:

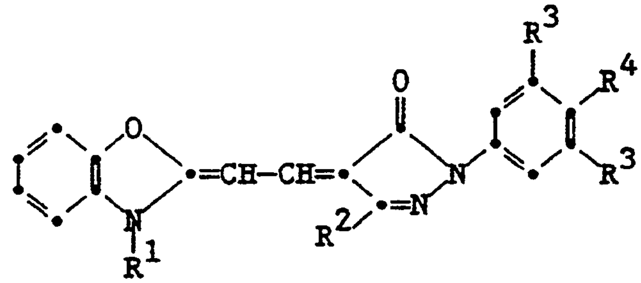

| Dye | $R^1$ | $R^2$ | $R^3$ | $R^4$ | λ-max (methanol) | εmax (x $10^4$) |
|---|---|---|---|---|---|---|
| 16 | $C_2H_5$ | $CH_3$ | H | $CO_2H$ | 450 | 7.4 |
| 17 | $C_2H_5$ | $CH_3$ | $CO_2H$ | H | 452 | 7.19 |

18 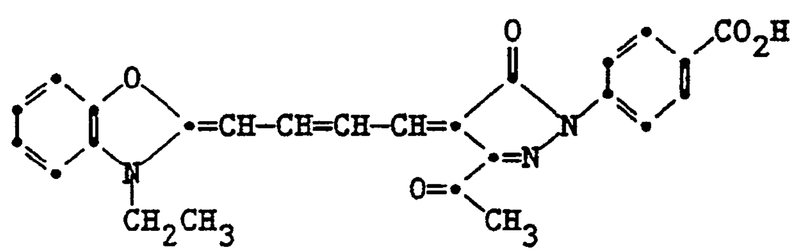

λ-max 562 nm (methanol) ε-max = 11.9 x $10^4$

## Table V

Barbituric Acid Merocyanines

General Structure:

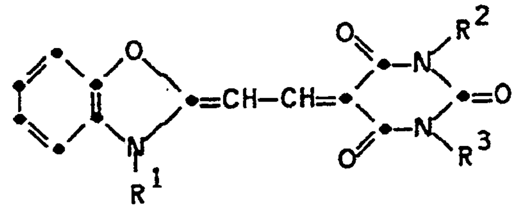

| Dye | $R^1$ | $R^2$ | $R^3$ | λ-max (methanol) | ε-max ($\times 10^4$) |
|---|---|---|---|---|---|
| 19 | $CH_2PhCO_2H$ | $C_2H_5$ | $C_2H_5$ | 442 | 10.70 |

## Table VI

General Structure:

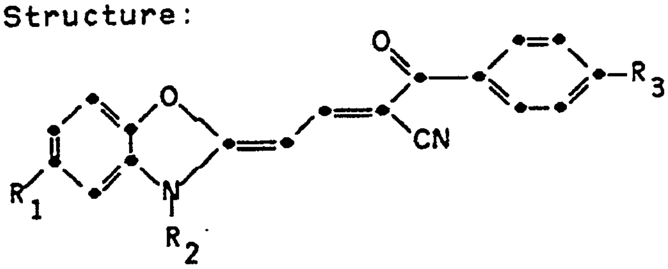

| Dye | $R^1$ | $R^2$ | $R^3$ |
|---|---|---|---|
| 20 | — | Et | $MeOEtSO_2NH$ |
| 21 | — | Me | $MeSO_2NH$ |
| 22 | $MeOEtSO_2NH$ | Et | $MeOEtSO_2NH$ |
| 23 | $MeOEtSO_2NH$ | Et | $HexSO_2NH$ |
| 24 | $MeSO_2NH$ | MeOEt | $MeSO_2NH$ |
| 25 | — | $CH_2PhCO_2H$ | $PrSO_2NH$ |
| 26 | $MeSO_2NH$ | MeOEt | $PrSO_2NH$ |
| 27 | $MeOEtSO_2NH$ | MeOEt | $PrSO_2NH$ |
| 28 | $EtSO_2NH$ | Et | $MeSO_2NH$ |

| | | | |
|---|---|---|---|
| 29 | $EtSO_2NH$ | Me | $MeSO_2NH$ |
| 30 | $MeOEtSO_2NH$ | MeOEt | $MeOEtSO_2NH$ |
| 31 | $HexSO_2NH$ | MeOEt | $MeSO_2NH$ |
| 32 | $MeOEtSO_2NH$ | MeOEt | $HexSO_2NH$ |
| 33 | – | $CH_2PhCO_2H$ | $MeSO_2NH$ |
| 34 | $MeSO_2NH$ | Me | $MeSO_2NH$ |
| 35 | $CO_2H$ | Me | $MeSO_2NH$ |
| 36 | $CO_2H$ | Me | $PrSO_2NH$ |
| 37 | $EtOEtOEtSO_2NH$ | Et | $MeSO_2NH$ |
| 38 | $EtOEtOEtSO_2NH$ | Et | $PrSO_2NH$ |
| 39 | $PrSO_2NH$ | Et | $MeSO_2NH$ |
| 40 | $PrSO_2NH$ | Me | $MeSO_2NH$ |
| 41 | $MeSO_2NH$ | Et | $EtSO_2NH$ |
| 42 | $EtSO_2NH$ | Et | $EtSO_2NH$ |
| 43 | $BuSO_2NH$ | Et | $MeSO_2NH$ |
| 44 | $BuSO_2NH$ | Et | $CO_2H$ |
| 45 | $BuSO_2NH$ | Me | $MeSO_2NH$ |
| 46 | $MeSO_2NH$ | Et | $BuSO_2NH$ |

## Table VII

Miscellaneous Dyes

Dye

47

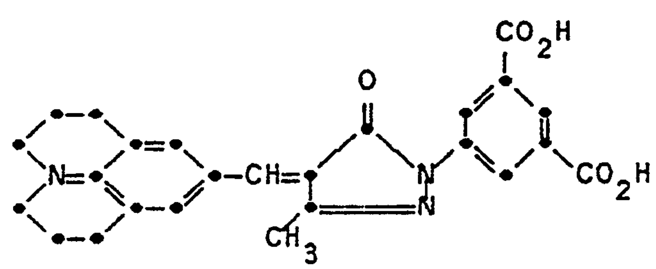

$\lambda$–max = 502 nm

$\varepsilon$–max = $5.47 \times 10^4$

48 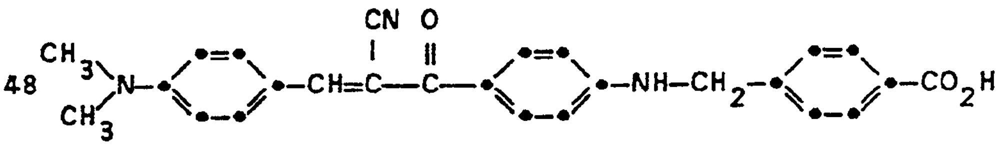

49 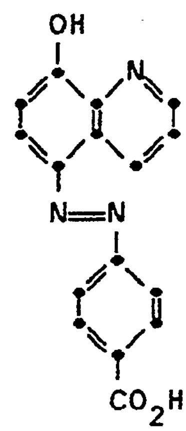

50 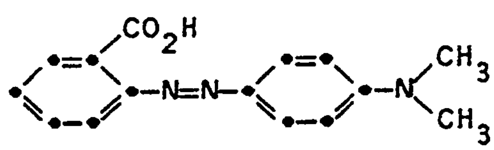

51 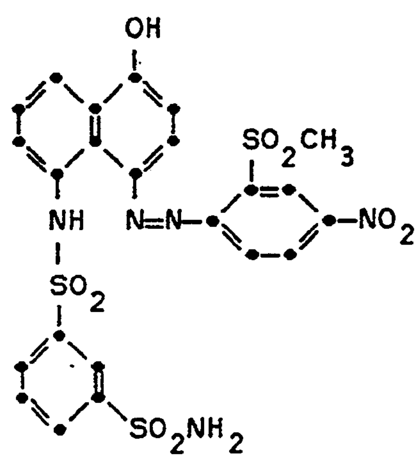

52 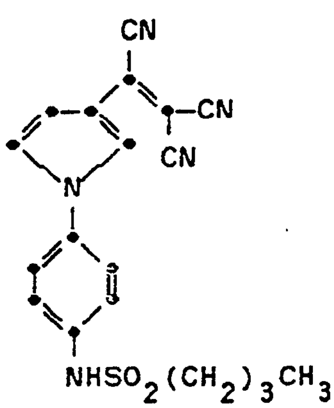

53

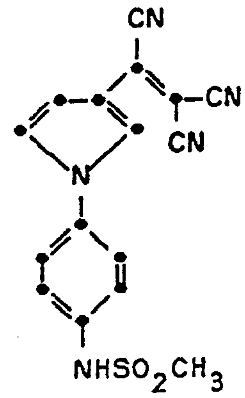

54

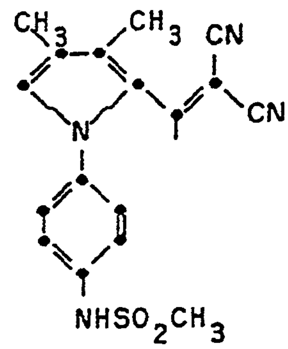

55

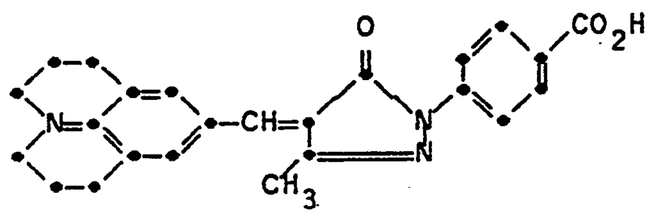

λ-max = 500 nm
ε-max = $5.82 \times 10^4$

## Table VIII

### Arylidene Dyes

General Structure:

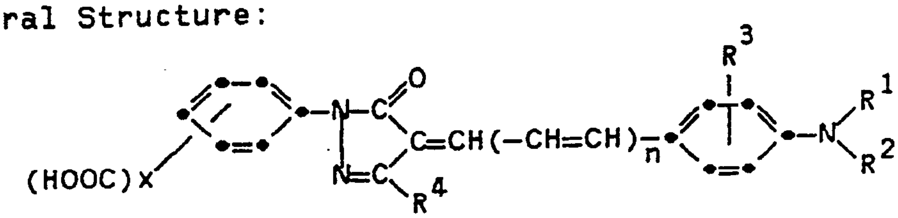

| Dye | $R^1, R^2$ | $R^3$ | $R^4$ | 1-Ph Substn. x | Position | n | λ-max (nm) | ε-max ($10^4$) |
|---|---|---|---|---|---|---|---|---|
| 56 | $CH_3$ | H | $CH_3$ | 1 | 4 | 0 | 466 | 3.73 |
| 57 | $C_2H_5$ | H | $CH_3$ | 1 | 4 | 0 | 471 | 4.75 |
| 58 | $n\text{-}C_4H_9$ | H | $CH_3$ | 1 | 4 | 0 | 475 | 4.50 |
| 59 | $CH_3$ | H | $COOC_2H_5$ | 1 | 4 | 0 | 508 | 5.20 |
| 60 | $i\text{-}C_3H_7O\underset{\underset{O}{\|}}{C}CH_2$ | $CH_3$ | $CH_3$ | 1 | 4 | 0 | 430 | 3.34 |
| 61 | $CH_3$ | H | $CH_3$ | 2 | 3,5 | 0 | 457 | 3.78 |
| 62 | $C_2H_5$ | H | $CH_3$ | 2 | 3,5 | 0 | 475 | 4.55 |
| 63 | $n\text{-}C_4H_9$ | H | $CH_3$ | 2 | 3,5 | 0 | 477 | 4.92 |
| 64 | $i\text{-}C_3H_7O\underset{\underset{O}{\|}}{C}CH_2$ | H | $CH_3$ | 2 | 3,5 | 0 | 420 | 3.62 |
| 65 | $i\text{-}C_3H_7O\underset{\underset{O}{\|}}{C}CH_2$ | $CH_3$ | $CH_3$ | 2 | 3,5 | 0 | 434 | 3.25 |
| 66 | $i\text{-}C_3H_7OC\ CH_2$ | H | $CH_3$ | 1 | 4 | 0 | 420 | 3.94 |
| 67 | $CH_3$ | H | $\overset{\overset{O}{\|}}{C}\ CH_3$ | 1 | 4 | 1 | 573 | 5.56 |
| 68 | $CH_3$ | H | COOEt | 1 | 3,5 | 0 | 502 | 4.83 |
| 69 | $C_2H_5$ | H | COOEt | 1 | 4 | 0 | 512 | 6.22 |
| 70 | $CH_3$ | H | $CF_3$ | 1 | 4 | 0 | 507 | 4.58 |
| 71 | $CH_3$ | H | Ph | 1 | 4 | 0 | 477 | 4.54 |
| 72 | $CH_3$ | H | $\overset{\overset{O}{\|}}{C}\ CH_3$ | 1 | 4 | 0 | 506 | 5.36 |

Table IX

Pyrazolone and Oxazole Merocyanines

73

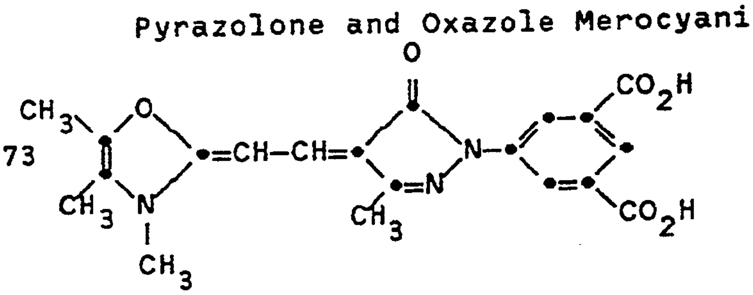

74

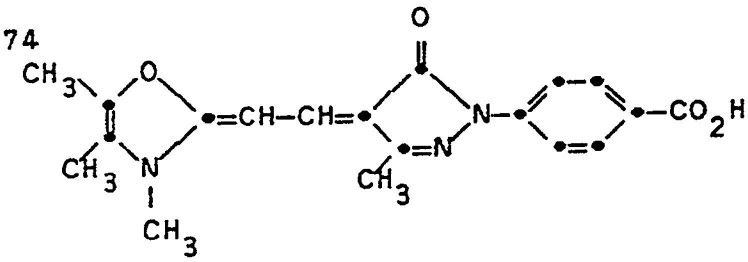

75

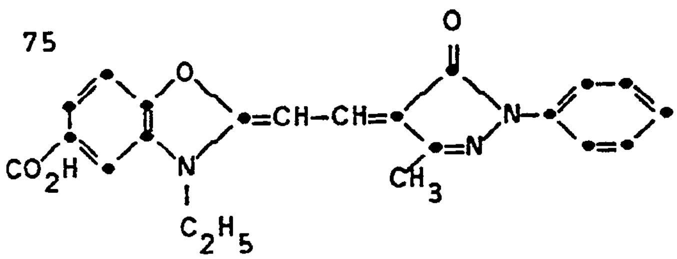

76

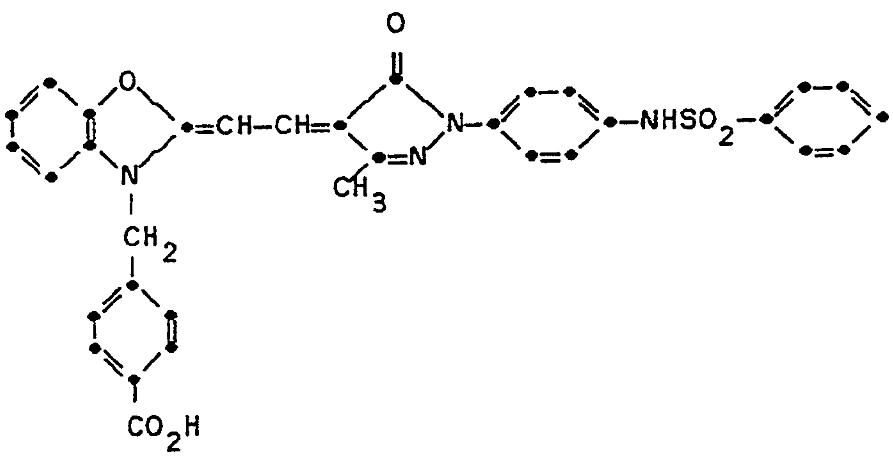

77

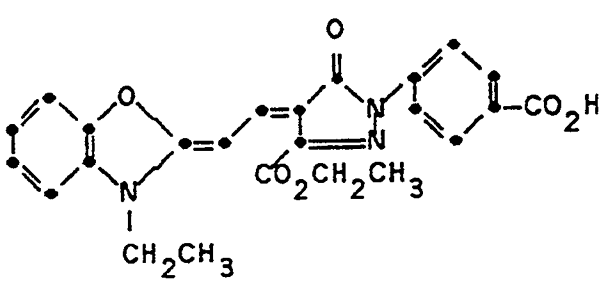

78

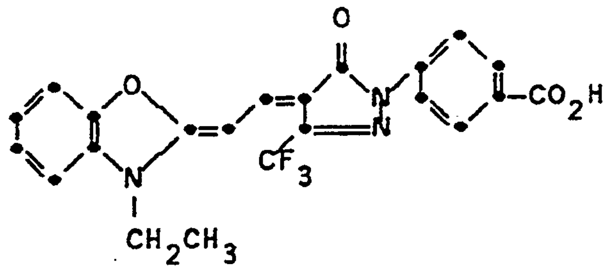

79

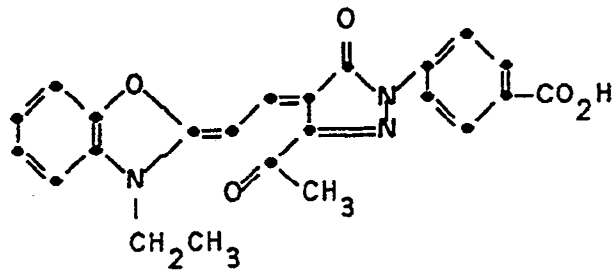

80

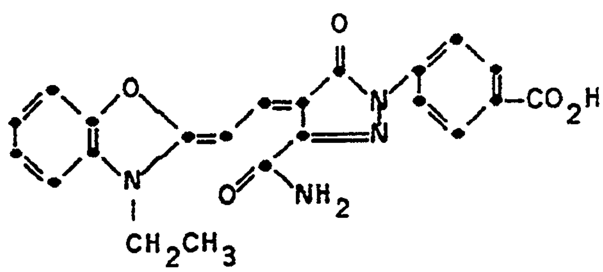

81

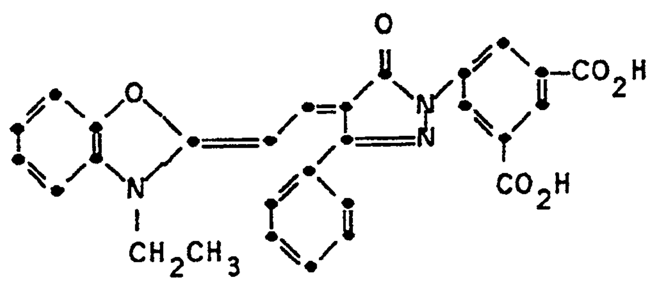

82

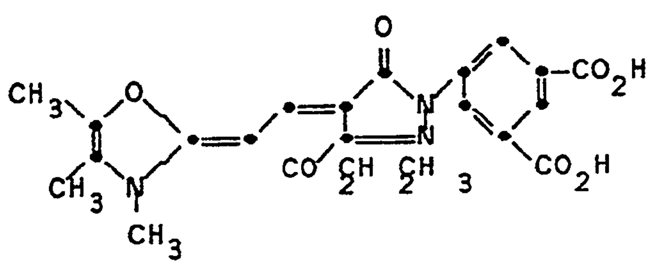

83

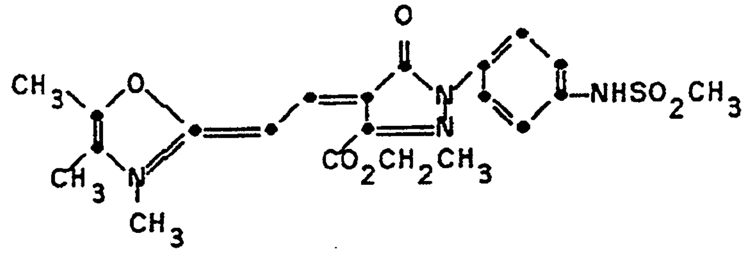

84

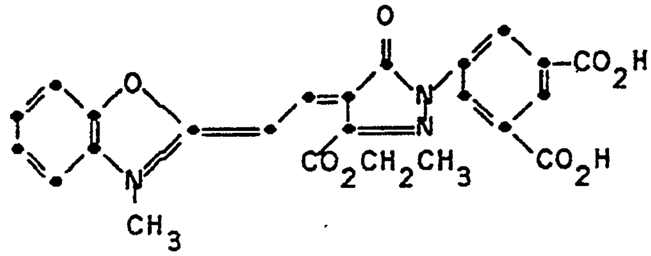

85

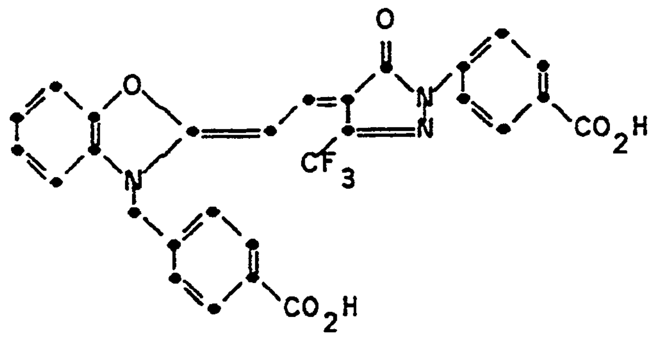

86

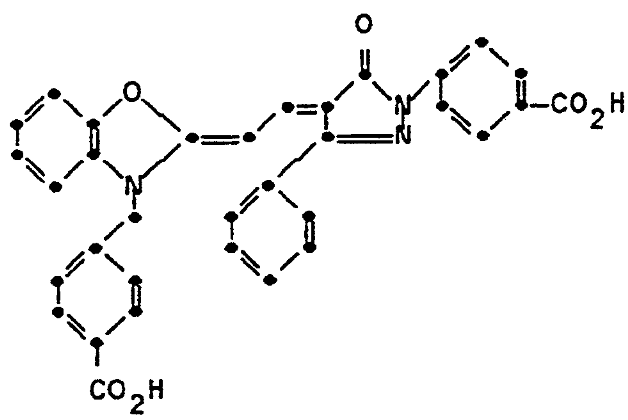

87

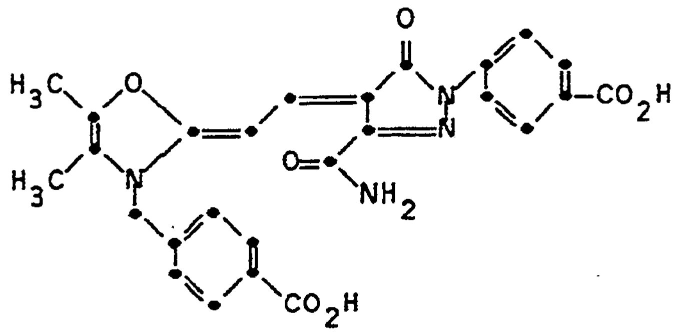

88

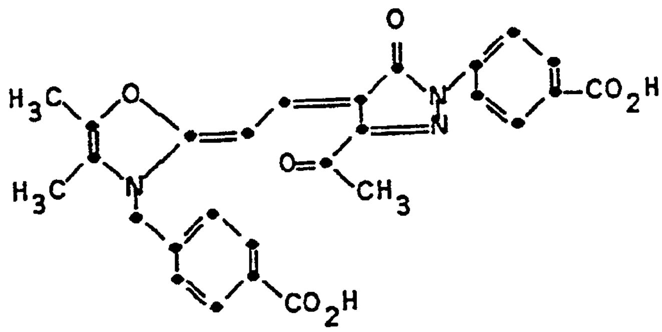

89

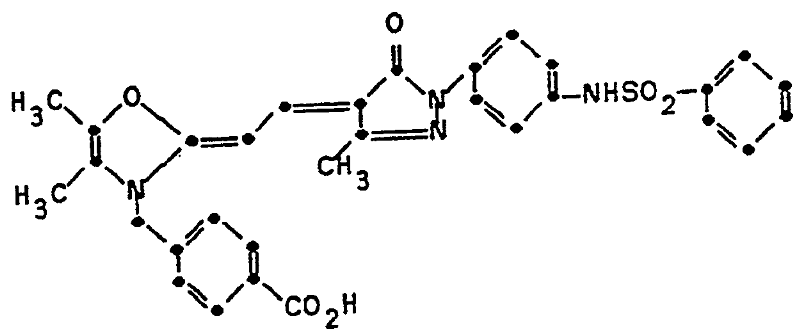

90

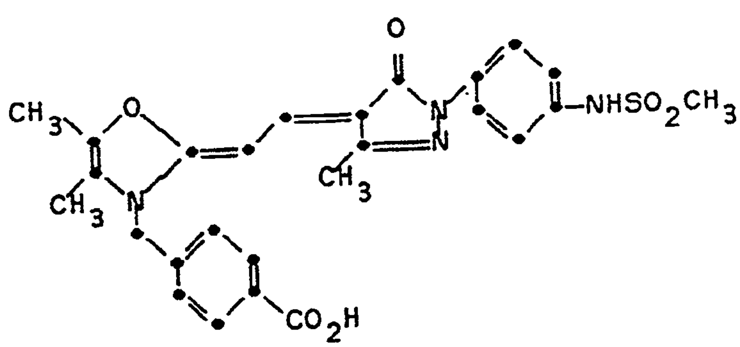

91

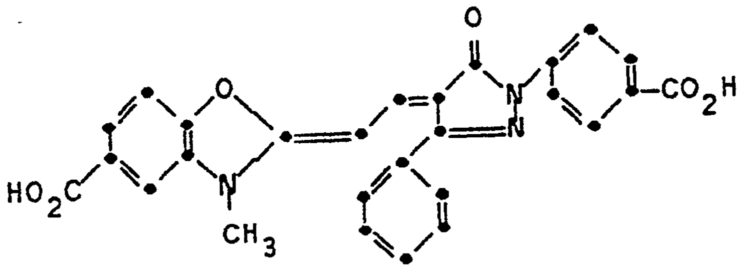

92

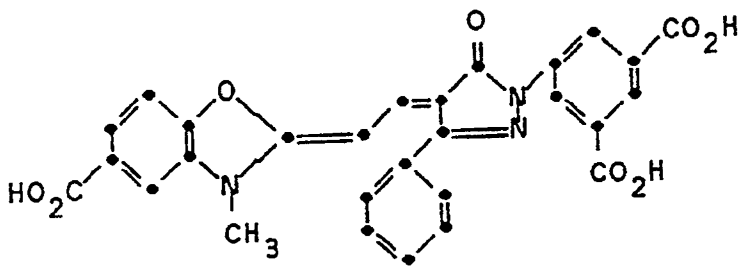

93

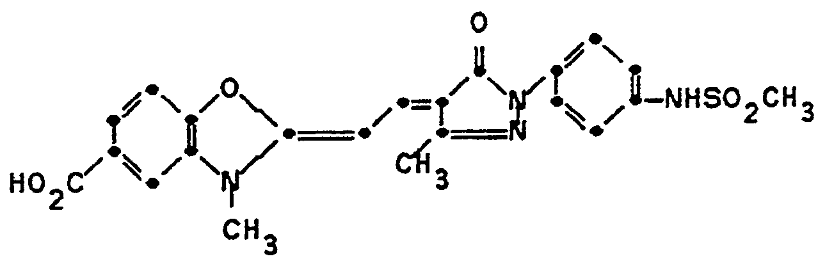

94

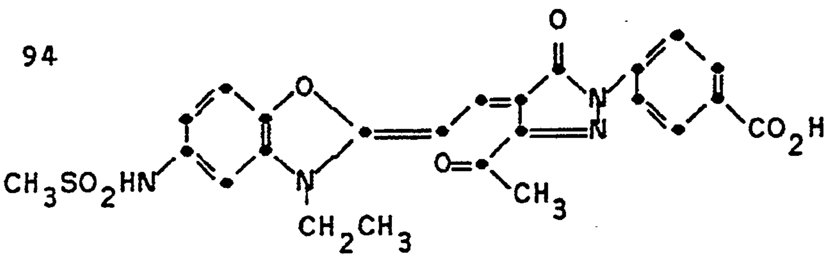

95

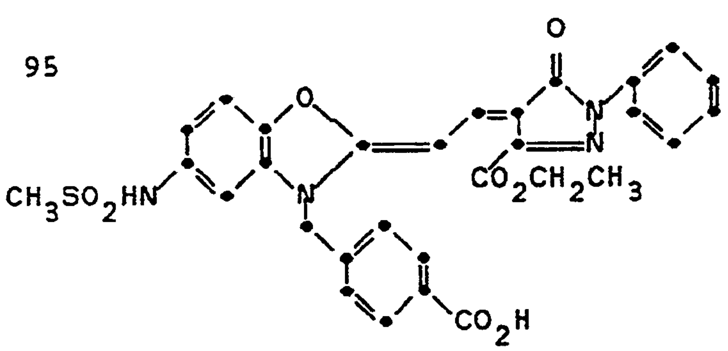

96

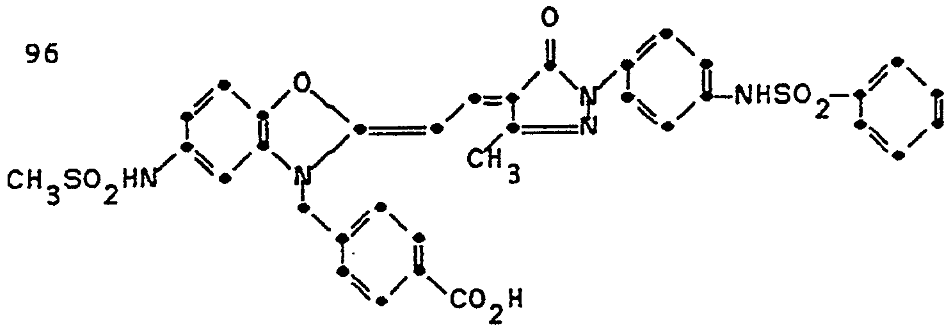

97

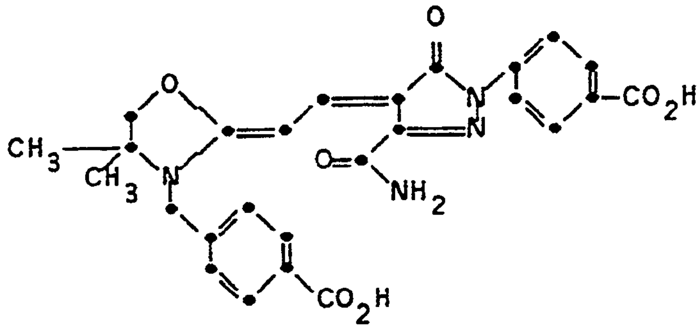

98

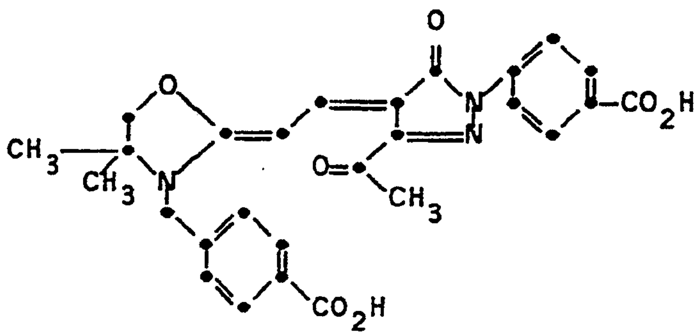

99

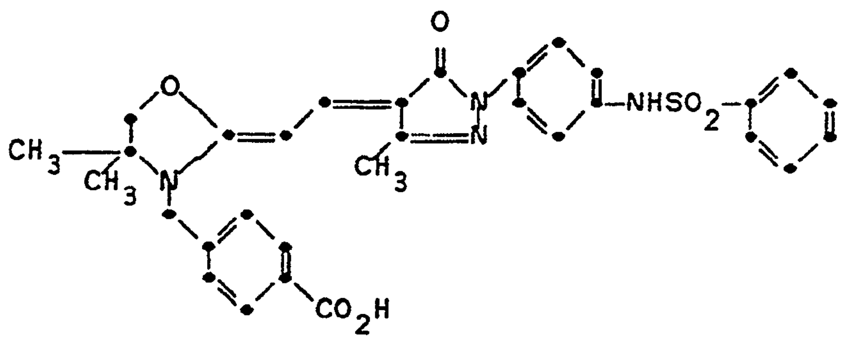

Table X

Pyrazolone and Oxazole Benzoylacetonitrile Merocyanines

100

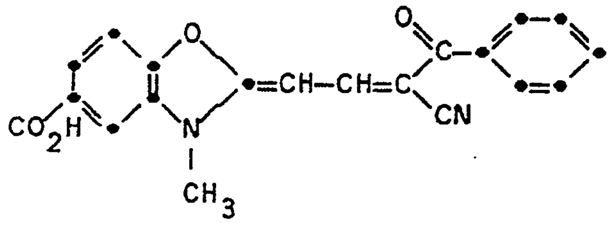

101

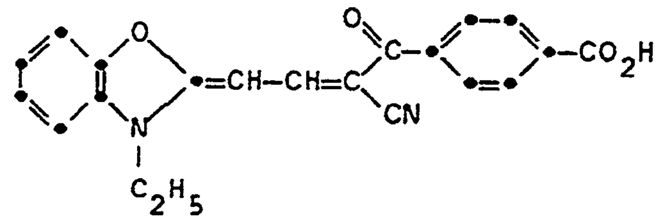

102

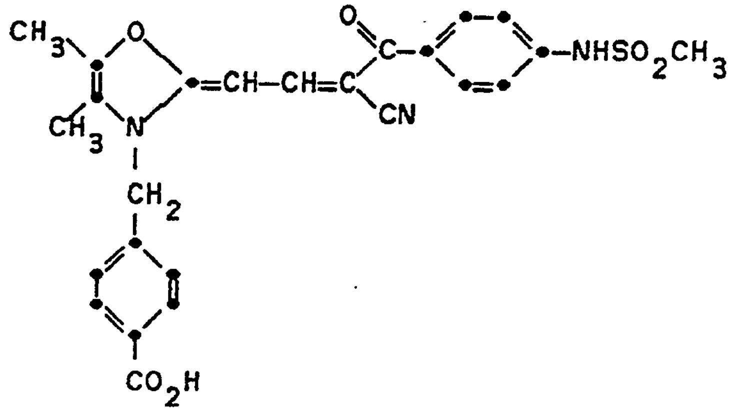

103

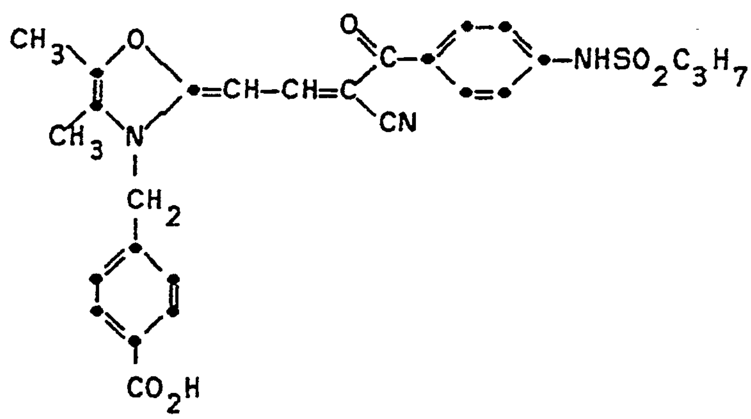

104

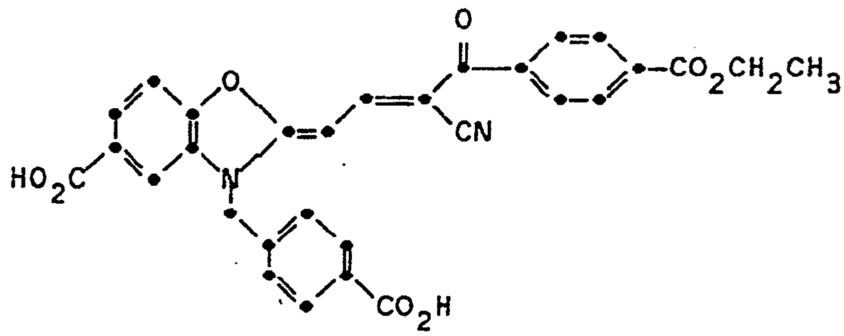

105

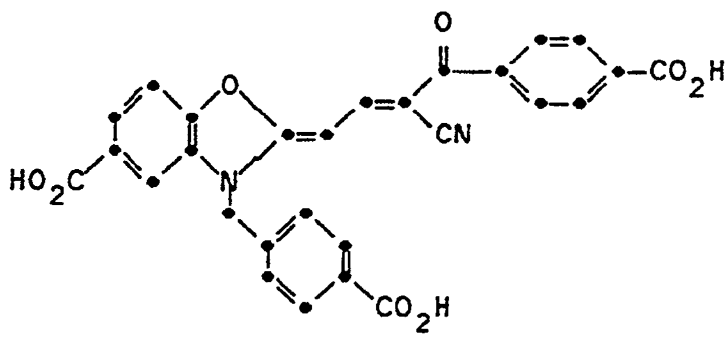

106

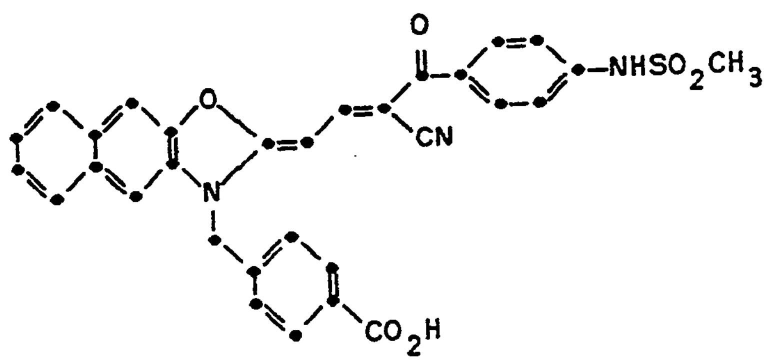

107

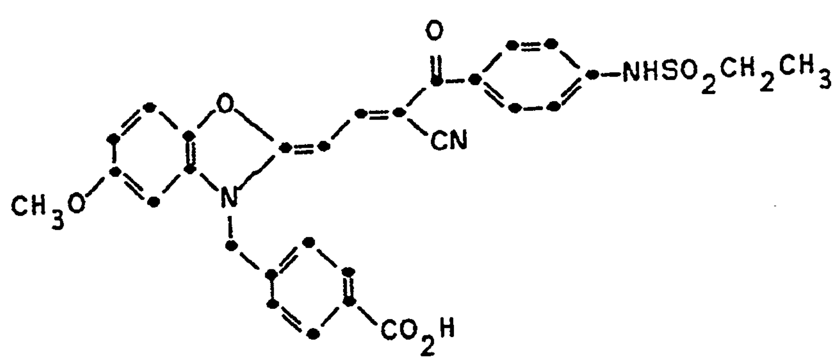

108

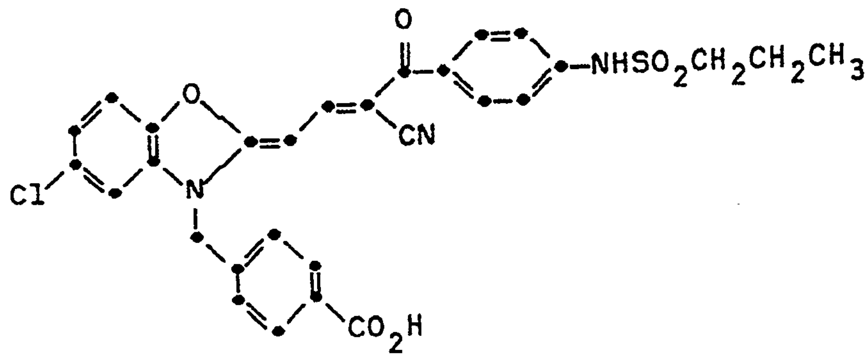

109

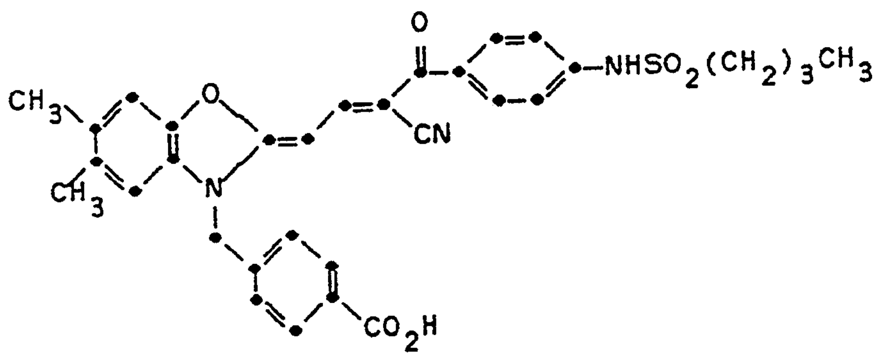

110

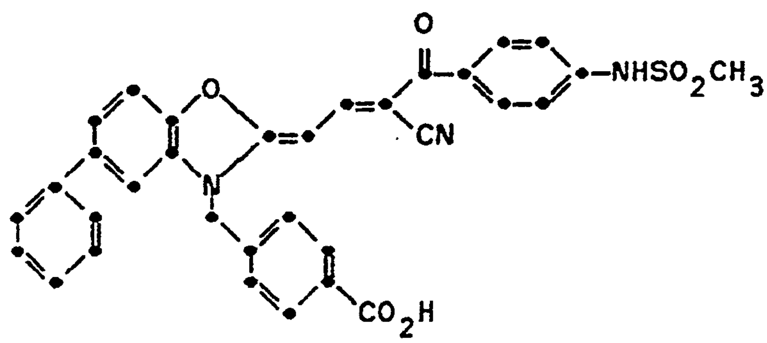

111

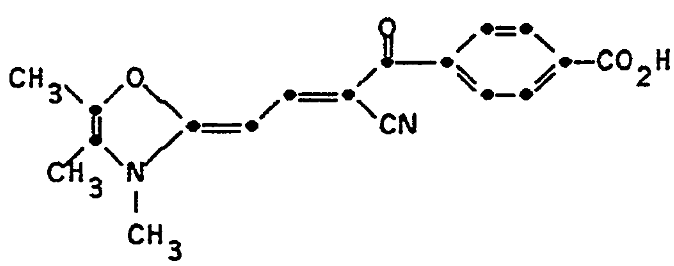

112

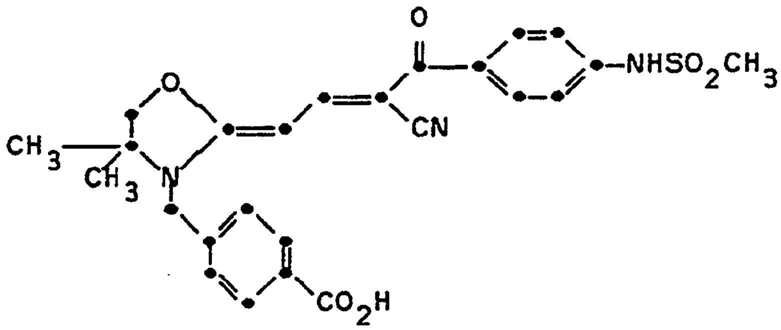

113

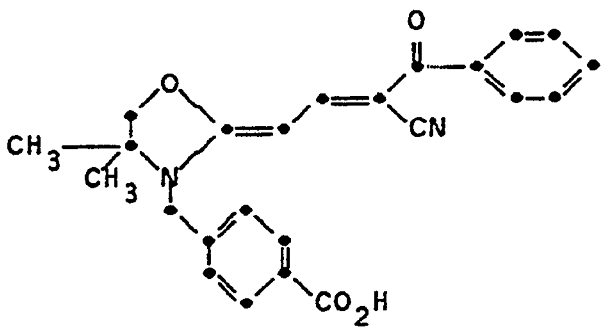

114

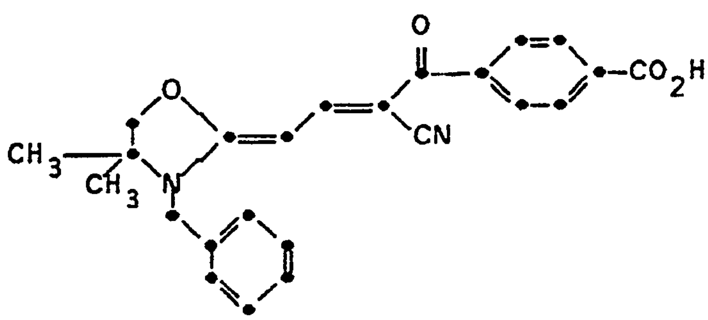

115

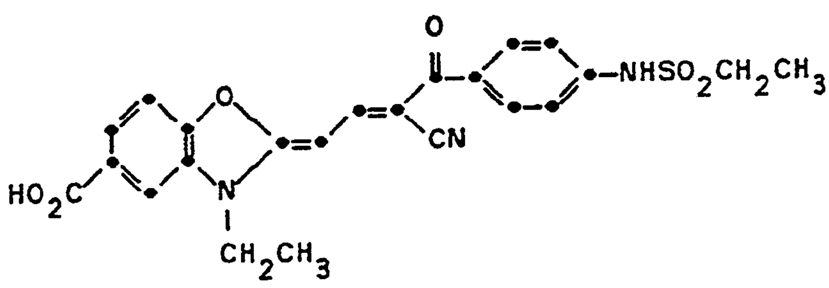

116

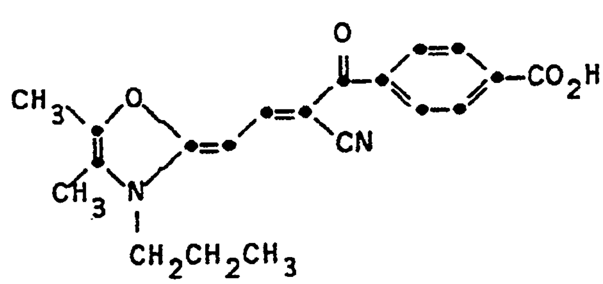

117

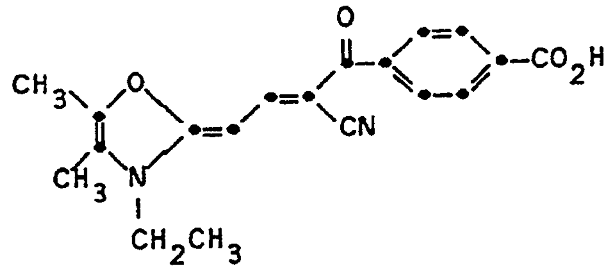

118

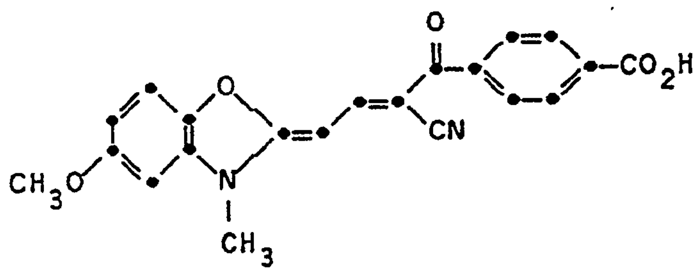

119

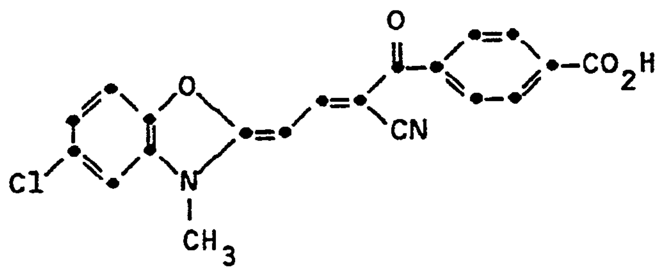

120

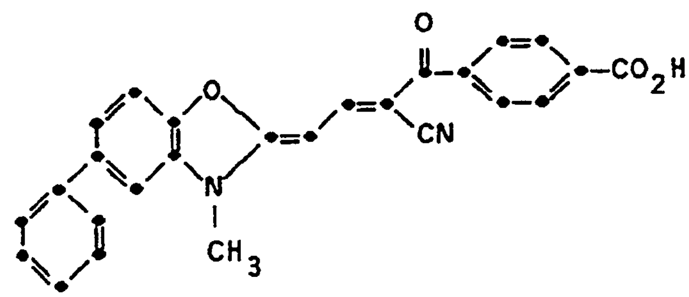

121

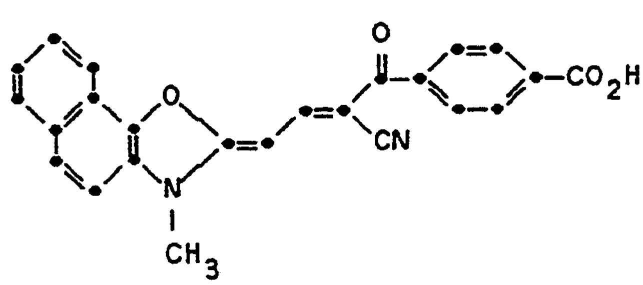

122

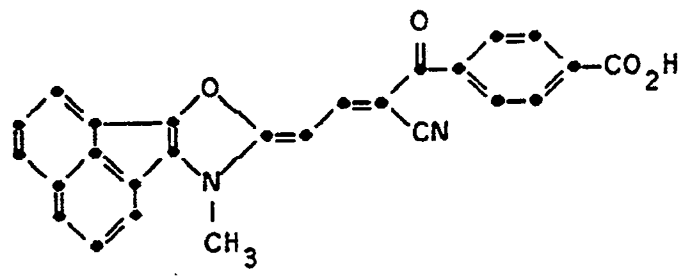

123

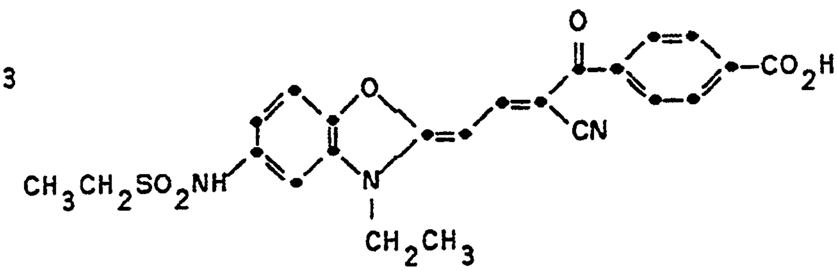

124

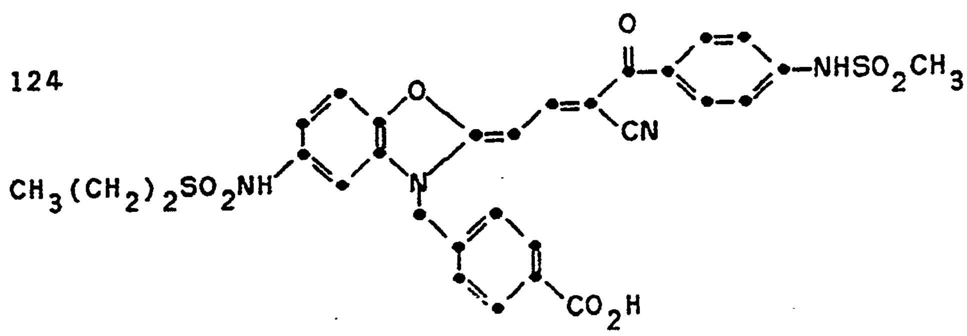

The dyes of formula (I) can be prepared by synthetic techniques well-known in the art, as illustrated by the synthetic examples below. Such techniques are further illustrated, for example, in "The Cyanine Dyes and Related Compounds", Frances Hamer, Interscience Publishers, 1964.

The dye compounds of formula (I) are utilized in the form of a solid particle dispersion (i.e., the dye is in the form of solid particles of microscopic size). The dispersion can be in any vehicle in which the dye is not soluble, such as an aqueous liquid having a pH low enough for the dye to be insoluble (e.g., a gelatin coating solution), an organic solvent in which the dye is insoluble, a monomer, or a polymeric binder. The dispersion is useful for incorporation into a layer having a polymeric film-forming binder known in the art (e.g., a hydrophilic colloid binder) a photographic element.

The dyes may be located in any layer of the element where it is desirable to absorb light, but it is particularly advantageous to locate them in a layer where they will be solubilized and washed out during processing. Useful amounts of dye range from 1 to 1000 mg/ft$^2$. The dye should be present in an amount sufficient to yield an optical density at the transmission D-max in the visible region before processing of at least 0.10 density units and preferably at least 0.30 density units. This optical density will generally be less than 5.0 density units for most photographic applications.

The solid particle dispersion can be formed by precipitating or by reprecipitating the dye in the form of a dispersion and/or by well-known milling techniques, e.g., ball-milling, sand-milling, or colloid-milling the solid dye in the presence of a dispersing agent. Reprecipitating techniques by dissolving the dye and precipitating by changing the solvent and/or the pH of the solution in the presence of a surfactant are well-known in the art. Milling techniques are well-known in the art and are described, for example in U.S. Patent 4,006,025. The dye particles in the dispersion should have a mean diameter of less than 10 µm and preferably less than 1 µm. The dye particles can be conveniently prepared in sizes ranging down to about 0.01 µm or less.

The support of the element of the invention can be any of a number of well-known supports for photographic elements. These include polymeric films such as cellulose esters (e.g., cellulose triacetate and diacetate) and

polyesters of dibasic aromatic carboxylic acids with divalent alcohols (e.g., poly(ethylene terephthalate)), paper, and polymercoated paper. Such supports are described in further detail in Research Disclosure, December, 1978, Item 17643 [hereinafter referred to as Research Disclosure], Section XVII.

The radiation-sensitive layer of the element of the invention can contain any of the known radiation-sensitive materials, such as silver halide, diazo image-forming systems, light-sensitive tellurium-containing compounds, light-sensitive cobalt-containing compounds, and others described in, for example, J. Kosar, Light-Sensitive Systems: Chemistry and Application of Nonsilver Halide Photographic Processes, J. Wiley & Sons, N.Y. (1965)..

Silver halide is especially preferred as a radiation-sensitive material. Silver halide emulsions can contain, for example, silver bromide, silver chloride, silver iodide, silver chlorobromide, silver chloroiodide, silver bromoiodide, or mixtures thereof. The emulsions can include coarse, medium, or fine silver halide grains bounded by 100, 111, or 110 crystal planes. Silver halide emulsions and their preparation are further described in Research Disclosure, Section I. Also useful are tabular grain silver halide emulsions, as described in Research Disclosure, January, 1983, Item 22534 and U.S. Patent 4,425,426.

The radiation-sensitive materials described above can be sensitized to a particular wavelength range of radiation, such as the red, blue, or green portions of the visible spectrum, or to other wavelength ranges, such as ultraviolet, infrared, X-ray, and the like. Sensitization of silver halide can be accomplished with chemical sensitizers such as gold compounds, iridium compounds, or other group VIII metal compounds, or with spectral sensitizing dyes such as cyanine dyes, merocyanine dyes, styryls, or other known spectral sensitizers. Additional information on sensitization of silver halide is described in Research Disclosure, Sections I-IV.

The dyes of formula (I) are useful in many applications requiring the use of a filter dye. For example, they can be used as interlayer dyes, trimmer dyes, antihalation dyes, or pelloid dyes. They can be used to prevent crossover in X-ray materials, to prevent unwanted blue light from reaching the green-sensitive emulsion layer of a multicolor photographic element, and other uses as indicated by the absorbance spectrum of the particular dye. The dyes can be used in a separate filter layer or as an intergrain absorber.

Multicolor photographic elements according to the invention generally comprise a blue-sensitive silver halide layer having a yellow color-forming coupler associated therewith, a green-sensitive layer having a magenta color-forming coupler associated therewith, and a red-sensitive silver halide layer having a cyan color-forming coupler associated therewith Color photographic elements and color-forming couplers are well-known in the art and are further described in Research Disclosure, Section VII.

The element of the invention can also include any of a number of other well-known additives and layers, as described in Research Disclosure. These include, for example, optical brighteners, antifoggants, image stabilizers, light-absorbing materials such as filter layers or intergrain absorbers, light-scattering materials, gelatin hardeners, coating aids and various surfactants, overcoat layers, interlayers and barrier layers, antistatic layers, plasticizers and lubricants, matting agents, development inhibitor-releasing couplers, bleach accelerator-releasing couplers, and other additives and layers known in the art.

The dye of formula (I) can be located in any layer of a photographic element where it is desired to absorb light. In a preferred embodiment, the dye is preferably located in a layer where it will be subjected to high pH (i.e., 8 to 12) and/or sulfite during photographic processing, so as to allow the dye to be solubilized and removed or decolorized .

The photographic elements of the invention, when exposed, can be processed to yield an image. During processing, the dye of formula (I) will generally be decolorized and/or removed Following processing, the dye of the invention should contribute less than 0.10 density unit, and preferably less than 0.02 density unit to the transmission D-max in the visible region in the minimum density areas of the exposed and processed element.

Processing can be by any type of known photographic processing, as described in Research Disclosure, Sections XIX-XXIV, although it preferably includes a high pH (i.e., 8 or above) step utilizing an aqueous sulfite solution in order to maximize decolorization and removal of the dye. A negative image can be developed by color development with a chromogenic developing agent followed by bleaching and fixing. A positive image can be developed by first developing with a non-chromogenic developer, then uniformly fogging the element, and then developing with a chromogenic developer. If the material does not contain a color-forming coupler compound, dye images can be produced by incorporating a coupler in the developer solutions.

Bleaching and fixing can be performed with any of the materials known to be used for that purpose. Bleach baths generally comprise an aqueous solution of an oxidizing agent such as water soluble salts and complexes of iron (III) (e.g., potassium ferricyanide, ferric chloride, ammonium of potassium salts of ferric ethylenediaminetetraacetic acid), water-soluble persulfates (e.g., potassium, sodium, or ammonium persulfate), water-soluble dichromates (e.g., potassium, sodium, and lithium dichromate), and the like. Fixing baths generally comprise an aqueous solution of compounds that form soluble salts with silver ions, such as sodium thiosulfate, ammonium thiosulfate, potassium thiocyanate, sodium thiocyanate, thiourea, and the like.

The invention is further illustrated by the following Examples:

Synthesis Example 1 - Dye 6

Step 1 - Preparation of Intermediate A

To a solution of 29.6 g of 5-amino-2-methylbenzoxazole in 100 ml pyridine cooled to 0°C was added 41.3 g hexanesulfonyl chloride. After 1 hour stirring at 0°C, a reddish precipitate formed. The reaction mixture was stirred at room temperature for 2 days and then poured into 1.4 l of water and stirred for 2 hours. A heavy oil deposited and the supernatant was decanted. The oil was dissolved in 1.0 l dichloromethane, which was extracted with 4 x 200 ml of 1N hydrochloric acid, then dried over magnesium sulfate. The solvent was removed, leaving a reddish brown liquid of 5-hexylsulfonamido-2-methylbenzoxazole (Intermediate A).

Step 2 - Preparation of Intermediate B

A mixture of 60 g of Intermediate A and 44 g ethyl p-toluenesulfonate was heated in a round bottom flask at 150°C for 5 minutes. Upon cooling to room temperature, the crude brown mass was almost solidified. The product was dissolved in 25 ml methanol and poured into 300 ml diethyl ether with rapid stirring for 1 hour. The solid precipitate was chilled at 2°C overnight, and then filtered. The tan powder was thoroughly washed with ether and recrystallized from 200 ml hot isopropyl alcohol to yield 23.4 g of 3-ethyl-5-hexylsulfonamido-2-methylbenzoxazolium p-toluenesulfonate (Intermediate B).

Step 3 - Preparation of Intermediate C

A combination of 10 g Intermediate B and 8 g N,N-diphenylformamidine was thoroughly mixed and heated with stirring at 150-160°C for 25 minutes. The flask was then fitted with a condenser and 50 ml hot acetone was cautiously added. An orange precipitate formed. The flask was removed from the heat, cooled, and chilled in ice. After 1 hour, the reddish precipitate was filtered off and discarded. The filtrate was poured into 300 ml diethyl ether and stirred for 2 hours. The resulting yellow-orange powder was filtered, washed with ether, and dried to yield 10.6 g of 2-(2-anilinovinyl)-3-ethyl-5-hexylsulfonamidobenzoxazolium p-toluenesulfonate (Intermediate C).

Step 4 - Preparation of Dye 6

A mixture of 2.7 g of Intermediate C, 15 ml ethanol, 0.54 g acetic anhydride, and 0.7 ml triethylamine was heated at reflux for 1 minute. Then 1.2 g 4-methylsulfonamidobenzoylacetonitrile (prepared according the procedure disclosed in Kreuger et al U.S. Patent 4,420,555) and 0.8 ml triethylamine were added and the mixture was heated at reflux for 2 minutes. The mixture was then chilled in ice for 30 minutes. The yellow-orange precipitate that had formed was filtered, washed with isopropyl alcohol and diethyl ether, then air dried to yield 1.17 g of crude dye. The reaction was repeated twice more to obtain a total of 3.0 g of crude dye, which was dissolved in 250 ml hot acetone, which was stirred with 10 g Amberlyst-15® ion exchange resin for 3 hours, heated for 15 minutes to reflux, then filtered while hot. The filtrate was chilled to 2°C overnight and the resulting yellow precipitate was air dried to yield 2.3 g of Dye 6. The dye had a melting point of 297-298°C, λ-max = 442 nm (methanol), ε : 7.32 x $10^4$. The pKa's of this dye was measured by acid titration in a 50/50 (volume basis) mixture of ethanol and water and was determined to be 8.1 for the methylsulfonamido substituent and 9.2 for the hexylsulfonamido substituent. The log P was determined to be 4.66.

Synthesis Example 2 - Preparation of Dye 7

Step 1 - Intermediate D

To a solution of 5-amino-2-methylbenzoxazole (14.8 g) in 50 ml pyridine cooled to 0°C was added methane sulfonylchloride (12.5 g). The mixture was stirred at room temperature under nitrogen. After three days of stirring, a tan precipitate had formed. The mixture was then poured into 800 ml ligroin P950 and stirred for 2 hours. The solid in the mixture was dissolved in 400 ml $CH_2Cl_2$, washed with 4 x 100 ml $H_2O$ with the water back extracted with 100 ml $CH_2Cl_2$, combined with the organic layers, dried over $MgSO_4$, filtered, and concentrated in vacuo to a tan brown solid. The solid was dissolved in 125 ml hot methanol, added to 25 ml isopropyl alcohol, chilled at 2° overnight filtered, washed with diethyl ether, and air dried to yield 15.2 g 2-methyl-5-methyl-5-methylsulfonamidobenzoxazolium iodide (intermediate D).

Step 2 - Intermediate E

Intermediate D (4.52 g) and ethyl p-toluenesulfonate (4.4 g) were combined in a large test tube and heated over a hot air gun with manual stirring for 5 minutes. A brownish melt formed, which solidified to a glass on cooling to room temperature. The glass was dissolved in 50 ml hot methanol, diluted with an 100 ml hot ethanol, and 9.0 g tetrabutylamonnium iodide dissolved in 20 ml ethanol was added. The brown, clear solution was cooled to room temperature and then ice cooled for 4 hours. Filtration of the resulting crystalline product gave 5.92 g of 3-ethyl-2-methyl-5-methylsulfonamidobenzoxazolium iodide (Intermediate E).

Step 3 - Intermediate F

Intermediate E (1.0 g) and diphenylformamidine (2.2 g) were combined in a flask and heated over a hot air gun with manual stirring until a yellow-orange color formed. The reaction was then heated for 1 minute at full heat until it became totally liquid. On cooling to room temperature, the reaction mixture solidified. This solid was dissolved in 20 ml hot acetone, poured into 100 ml diethyl ether with stirring, and stirred for 1 hour. The solid was then filtered out and washed with diethyl ether to give 1.2 g of 2-(2-anilinovinyl)-3-ethyl-5-methylsulfonamidobenzoxazolium iodide (Intermediate F).

Step 4 - Dye 7

Intermediate F (3.8 g) and 20 ml ethanol were combined with stirring, then acetic anhydride (1.08 g) and triethylamine (2.2 g) were added. The mixture was heated with a hot air gun for 30 seconds and then pulverized. 1.5 ml of triethylamine was added and the mixture was heated for 2 minutes, stirred without heating for 5 minutes, cooled to room temperature, diluted with 20 ml isopropyl alcohol, and filtered. The solid was washed with 50 ml isopropyl alcohol, 50 ml diethyl ether, and air dried to yield 3.0 g of orange-brown powder. The solid was recrystallized by dissolving in 75 ml hot chclohexanone, diluting with 200 ml isopropyl alcohol, stored overnight at 2°C, and the solid filtered out, washed with diethyl ether and air dried to yield 2.4 g of Dye 7. The $\lambda$-max (methanol) was 446 nm, $\varepsilon$-max = $7.84 \times 10^4$. The pKa's were measured by acid titration in a 50/50 (volume basis) mixture of ethanol and water and determined to be 8.2 for the propylsulfonamido substituent and 9.2 for the methylsulfonamido substituent. The log P was determined to be 3.07.

Synthesis Example 3

Preparation of Dye 61

Step 1 Preparation of Intermediate - 1-(3,5-Dicarboxyphenyl -3-methyl)-2-pyrazolin-5-one

A solution of sodium nitrite (35.8 g, 0.52 mol) in water (75 ml) was added to a slurry of 5-aminoisophthalic acid (90.6 g, 0.50 mol) in 4.8 molar HCl (500 ml) at 0°C over 15 minutes with stirring. Stirring was continued for one hour at 0-5°C and the slurry was then added to a solution of sodium sulfite (270 g, 2.2 mol) in water (1.2l) all at one time, with stirring, at 2°C. The resulting homogeneous solution was heated at 50-60°C for 45 minutes. Concentrated HCl (60 ml) was added and the reaction mixture was heated further at 90°C for one hour. After cooling to room temperature, another portion of concentrated HCl (500 ml) was added. The solid was isolated by filtration and washed on a funnel with acidified water, EtOH and ligroin in succession. The off-white solid was dissolved in a solution of NaOH (76 g, 1.85 mol in 600 ml water). This solution was subsequently acidified with glacial acetic acid (166 ml, 3.0 mol) to yield a thick slurry. This was isolated by filtration, washed on the funnel with water, EtOH, and ligroin in succession, and thoroughly dried in a vacuum oven at 80°C, and 10 mm Hg. The mp was above 300°C. The NMR and IR spectra were consistent with the structure for 5-hydrazino-1,3-benzenedicarboxylic acid. The product gave a positive test for hydrazine with Tollens' reagent.

A slurry composed of the product 5-hydrazino-1,3-benzenedicarboxylic acid (64.7 g, 0.33 mol), ethylacetoacetate (50.7 g, 0.39 mol) and glacial acetic acid (250 ml) was stirred and refluxed for 22 hours. The mixture was cooled to room temperature and the product that had precipitated was isolated by filtration, washed with water, EtOH, $Et_2O$, and ligroin in succession and thoroughly dried in a vacuum oven at 80°C and 10 mm Hg. The mp of the solid was above 310°C. The NMR and IR spectra were consistent with the assigned structure. The product gave a negative test with Tollens' reagent. The C,H, and N elemental analyses were in agreement with those calculated for the empirical formula.

Step 2 Preparation of 1-(3,5-Dicarboxyphenyl)-4-(4-dimethylaminobenzylidene)-3- methyl-2- pyrazolin- 5-one (Dye 61)

A slurry composed of 1-(3,5-dicarboxyphenyl)-3-methyl-2-pyrazoline-5-one (44.6 grams, 0.17 mol), 4-dimethylamino-benzaldehyde (26.9 grams, 0.18 mol) and EtOH (500 mL) was heated at reflux for three hours. The reaction mixture was chilled in ice and the resulting crude orange product was isolated by filtration and washed with EtOH (200 mL). The product was purified by three repetitive slurries of the solid in acetone (1.4 l) at reflux and filtering to recover the dye. The mp of the product was above 310°C. The NMR and IR spectra were consistent with the structure assigned. The C, H, and N elemental analyses were in agreement with those calculated for the empirical formula. The pKa of the carboxy substituent was measured by acid titration in a 50/50 volume basis mixture of ethanol and water and determined to be 5.

Synthesis Example 4

Preparation of Dye 56 (1-(4-Carboxyphenyl)-4-(4-dimethylaminobenzylidene)-3-methyl-2-pyrazolin-5-one

A slurry composed of 1-(4-carboxyphenyl)-3-methyl-2-pyrazolin-5-one (21.8 g, 0.10 mol), 4-dimethylamino-benzaldehyde (14.9 g, 0.10 mol) and EtOH (250 ml) was heated at reflux for two hours. The reaction mixture was cooled to room temperature, resulting in a crude orange product which was isolated by filtration. The product was then washed with ether and dried. The product was purified further by making a slurry of the solid in EtOH (700 ml) at refluxing temperature and filtering the slurry to recover the dye. The treatment was repeated. The mp of the product was above 310°C. The NMR and IR spectra were consistent with the structure assigned. The C, H, and N elemental analyses were in agreement with those calculated for the empirical formula. The pKa of the carboxy substituent was measured by acid titration in a 50/50 volume basis mixture of ethanol and water and determined to be 5.

Synthesis Example 5 - Preparation of Dye 16

4.36 g of 1-(4-carboxyphenyl)-3-methyl-2-pyrazolinone was combined with 8.68 g acetanilidovinylbenzoxazolium iodide, 4.0 g triethylamine, and 100 ml ethanol and refluxed. After 45 minutes, an orange solid had formed. The mixture was cooled to room temperature, chilled in ice for 30 minutes, filtered, washed with ethanol and ligroin P950, and air dried to yield 7.4 g of a dull orange powder. This powder was dissolved in 200 ml methanol and 100 ml water with 20 ml triethylamine. The mixture was filtered to remove particulates and the filtrate was acidified to pH 4 with glacial acetic acid while rapidly stirring. The resulting solid was filtered and successively washed with water, ethanol, ligroin P950, and dried to yield 6.75 g of dye 16. The λ-max in methanol and triethylamine was 450 nm, $\varepsilon = 7.4 X 10^4$. NMR analysis indicated the dye had the structure of dye 103.

Synthesis Example 6 - Preparation of Dye 17

5.2 g of 1-(3,5-dicarboxyphenyl)-3-methyl-2-pyrazolinone was combined with 9.5 g acetanilidovinylbenzoxazolium iodide, 6.0 g triethylamine, and 100 ml ethanol and refluxed. After 30 minutes, a dark orange precipitate had formed. The mixture was cooled to room temperature, diluted with 150 ml water, and 5 ml glacial acetic acid was added with rapid stirring. The orange precipitate was filtered, washed with 100 ml water, and dried. This material was slurried in 300 ml refluxing methanol, allowed to cool to room temperature, and stirred for an additional 20 minutes. The solid was filtered, washed with 200 ml methanol, and dried to yield 7.6 g of dye 17. The λ-max in methanol and triethylamine was 452 nm, $\varepsilon = 7.19 X 10^4$, melting point : 310°C. NMR analysis indicated the dye had the structure of dye 17.

Synthesis Example 7 - Preparation of Dye 18

To a slurry of 3-acetyl-1-(4-carboxyphenyl)-2-pyrazolinone (0.75 g), 3-ethyl-2-(4-methoxy-1,3-butadienylidenyl)benzoxazolium iodide (1.08 g), and 25 ml methanol was added 1.0 ml triethylamine. The mixture was allowed to stand at room temperature for 30 minutes. The deep magenta solid was filtered and washed ethanol and ligroin, and dried to yield 0.85 g of crude dye 4. The dye was recrystallized by slurrying in 30 ml of a 2:1 mixture of ethanol and methanol, heating, chilling with ice, filtering the solid, and washing with ethanol to yield 0.80 g of dye 18. The λ-max in methanol and triethylamine was 562 nm, $\varepsilon$ : $11.9 X 10^4$. NMR analysis indicated the dye had the structure of dye 18.

Examples 1-7 - Preparation of Solid Particle Dispersions

Dyes 16-18 and 73-76 were prepared as solid particle dispersions by ball-milling according to the following procedure. Water (21.7 ml) and a 6.7% solution of Triton X-200® surfactant (2.65 g) were placed in a 60 ml screw-capped bottle. A 1.00 g sample of dye was added to this solution. Zirconium oxide beads (40 ml, 2 mm diameter) were added and the container with the cap tightly secured was placed in a mill and the contents milled for four days. The container was removed and the contents added to a 12.5% aqueous gelatin (8.0 g) solution. The new mixture was placed on a roller mill for 10 minutes to reduce foaming and the resulting mixture was filtered to remove the zirconium oxide beads.

Examples 8-14 - Dye Wandering and Solubilization

Dyes 16-18 and 73-76 were coated as solid particle dispersions (particle sizes of 0.01 to 1.0 μm) in gelatin on polyester supports according to the following procedure. A spreading agent (surfactant 10G®) and a hardener (bis(vinylsulfonylmethyl) ether) were added to the dye-gelatin melt prepared as described above. A melt from this mixture was then coated on a poly(ethylene terephthalate) support to achieve a dye coverage of 0.32 g/m², a gelatin coverage of 1.60 g/m², a spreading agent level of 0.096 g/m², and a hardener level of 0.016 g/m².

A comparison dye of the formula:

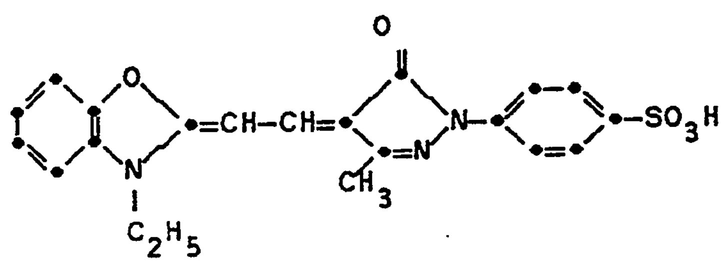

was also coated in gelatin on an identical support at identical gelatin and dye levels. The absorbance of the dye dispersions was measured with a spectrophotometer. Identical elements were subjected to a 5 minute distilled water wash, to Kodak E-6® Processing (which is described in British Journal of Photography Annual, 1977, pp. 194-97), and to Kodak Prostar® processing (which is used commercially to process microfilm, subjecting the elements to a development step at a pH of about 11.4 for about 30 seconds), and the absorbance was measured for each. The results are presented in Table XI.

Table XI

| Dye | λ-max(nm) | Bandwidth (nm) | D-max | D-max after water Wash | D-max After E-6® Processing | D-max After Prostar® Processing |
|---|---|---|---|---|---|---|
| 73 | 410 | 98 | 1.18 | 1.05 | 0.01 | 0.01 |
| 17 | 439 | ≈ 113 | 1.52 | 1.45 | — | 0.03 |
| 16 | 505 | 180 | 0.98 | 0.97 | — | 0.02 |
| 18 | 635 | 292 | 0.47 | 0.47 | — | 0.01 |
| 74 | 473 | 40 | 1.20 | 1.12 | 0.01 | 0.01 |
| 75 | 456 | 120 | 1.78 | 1.77 | 0.01 | 0.01 |
| 76 | 455 | 84 | 1.83 | 1.86 | 0.01 | 0.28 |
| comparison | 425 | 81 | 2.28 | 0.01 | — | — |

The results presented in Table XI show that dyes 16-18 and 73-76 according to the invention are not affected by the water wash, indicating no wandering at coating pH, but are fully solubilized for removal and/or decolorization by the photographic processing to which they were subjected. The comparison dye, on the other hand, was washed out during the water wash, indicating severe dye wandering.

Synthesis Example 8 - Dye 35

Step 1 - Preparation of Intermediate G

To a slurry of 4-methylsulfonamidobenzoylacetonitrile (7.0 g) in acetonitrile (70 ml), diethoxymethylacetate (16.2 g) was added and the mixture heated at reflux for 30 minutes. The mixture was cooled to room temperature and filtered. The filtrate was poured into 600 ml diethyl ether, after which 800 ml ligroin P950 was added with rapid stirring. A light yellow oil formed in droplets, which spontaneously crystallized. The crystalline product was collected by filtration, washed with ligroin P950, and dried to yield 7.1 g of 2-(ethoxymethylidene)-2-(4'-methylsulfonamidobenzoyl)acetonitrile (Intermediate G).

Step 2 - Preparation of Intermediate H

5-Carboxy-2-methylbenzoxazole (8.9 g) and methyl-p-toluenesulfonate (11.16 g) were combined and heated to 200°C with stirring for 10 minutes. The mixture became a brown liquid and mild boiling occured. The reaction was cooled to room temperature and the liquid solidified. Acetone (50 ml) was added, and with constant heating at reflux, the product was broken up with a spatula. The resulting slurry was heated at reflux for 15 minutes with rapid stirring and the off-white product was collected by filtration. This product was slurried again in refluxing acetone for 30 minutes, filtered, washed with ligroin P950, and dried to yield 9.3 g of 5-carboxy-2,3-dimethylbenzoxazolium p-toluenesulfonate (Intermediate H).

Step 3 - Preparation of Dye 35

To a slurry of Intermediate G (2.9 g) and Intermediate H (3.63 g) in ethanol (30 ml), 2.2 g triethylamine was added. The mixture was heated to reflux, held at reflux for 15 minutes, and then cooled to room temperature. The resulting solid was collected by filtration and washed with 25 ml ethanol. The solid was then slurried in 500 ml acetic acid at reflux for 30 minutes, chilled in ice to room temperature, and filtered. This solid was washed with 100 ml diethyl ether and dried to yield Dye 35. The dye had a melting point of greater than 310°C, a λ-max of 436 nm (methanol), and a ε-max of $4.21 \times 10^4$. Elemental analysis indicated the following content: C=57.4%, H=3.9%, N=9.6%, S=7.3%.

Synthesis Example 9 - Dye 102

Step 1 - Intermediate I

2,4,5-Trimethyloxazole (11.66 g), α-bromo-p-toluic acid (21.5 g), and dry acetonitrile (100ml) were combined and refluxed for 14 hours under nitrogen with constant stirring. Upon cooling to room temperature, the reaction mixture solidified. The solid was diluted with 100 ml acetone and filtered. The collected solid was slurried in 400 ml refluxing acetone for 20 minutes and filtered while hot. The collected solid was again slurried in 400 ml refluxing acetone and filtered while hot. This solid was washed with 100 ml acetone, then 100 ml ligroin P950 and dried to yield 21.6 g 3-(4-carboxybenzyl)-2,4,5-trimethyloxazolium bromide (Intermediate I).

Step 2 - Preparation of Dye 102

Intermediate I (3.26 g), Intermediate G from Syntehsis Example 10 (2.94 g), ethanol (30 ml), and triethylamine (2.2 g) were combined in that order. The mixture was brought to reflux with constant stirring and held at reflux for 45 minutes. After this time, the mixture had solidified to a bright yellow mass. This solid was removed from the heat, diluted with 60 ml ethanol, filtered, and the collected product was washed with 50 ml diethyl ether. The solid was then slurried in 300 ml acetic acid at reflux for 30 minutes, cooled to room temperature, and filtered. The resulting solid was washed with 300 ml diethyl ether, then 100 ml ligroin P950, and dried. This solid was dissolved in 30 ml dimethylsulfoxide at 60°C, cooled to 50°C, and combined with 60 ml methanol with stirring. After 1 minute, a solid had precipitated. The mixture was stirred at room temperature for 30 minutes and the solid was collected by filtration, washed with 50 ml methanol, and dried to yield 2.7 g

of Dye 102. λ-max = 433 nm (methanol), ε-max = 5.68 x $10^4$, elemental analysis: C=60.4%, H=4.7%, N=8.3%, S=6.3%.

Examples 15-23 - Dye Wandering and Solubilization

Dyes 6-8, 35-36, and 100-103 were prepared as solid particle dispersions by ball-milling according to the following procedure. Water (21.7 ml) and a 6.7% solution of Triton X-200® surfactant (2.65 g) were placed in a 60 ml screw-capped bottle. A 1.00 g sample of dye was added to this solution. Zirconium oxide beads (40 ml, 2 mm diameter) were added and the container with the cap tightly secured was placed in a mill and the contents milled for four days. The container was removed and the contents added to a 12.5% aqueous gelatin (8.0 g) solution. The new mixture was placed on a roller mill for 10 minutes to reduce foaming and the resulting mixture was filtered to remove the zirconium oxide beads

These solid particle dispersions were coated on polyester supports according to the following procedure. A spreading agent (surfactant 10G®) and a hardener (bis(vinylsul- fonylmethyl) ether) were added to the dye-gelatin melt prepared as described above. A melt from this mixture was then coated on a poly(ethylene terephthalate) support to achieve a dye coverage of 0.32 g/$m^2$, a gelatin coverage of 1.60 g/$m^2$, a spreading agent level of 0.096 g/$m^2$, and a hardener level of 0.016 g/$m^2$. The absorbance of the dye dispersions was measured with a spectrophotometer. Identical elements were subjected to a 5 minute distilled water wash, to Kodak E-6® Processing (which is described in British Journal of Photography Annual, 1977, pp. 194-97), and to Kodak Prostar® processing (which is used commercially to process microfilm, subjecting the elements to a development step at a pH of about 11.4 for about 30 seconds), and the absorbance was measured for each. The results are presented in Table XII.

## Table XII

| Dye | λ-max(nm) | Bandwidth (nm) | D-max | D-max after water Wash | D-max After E-6® Processing | D-max After Prostar® Processing |
|---|---|---|---|---|---|---|
| 6 | 438 | 88 | 2.28 | 2.22 | 0.02 | ——— |
| 7 | 425 | 99 | 1.72 | 1.72 | 0.01 | ——— |
| 8 | 481 | 88 | 1.53 | 1.57 | 0.02 | ——— |
| 35 | 434 | 110 | 1.13 | 0.82 | 0.01 | 0.01 |
| 36 | 463 | 72 | 1.73 | 1.69 | 0.01 | 0.01 |
| 100 | 440 | 110 | 1.22 | 1.05 | 0.01 | 0.01 |
| 101 | 483 | 105 | 1.22 | 0.98 | 0.01 | 0.01 |
| 102 | 401 | 71 | 0.86 | 0.76 | 0.01 | 0.01 |
| 103 | 411 | 75 | 0.87 | 0.87 | 0.01 | 0.03 |

The results presented in Table XII show that the dyes according to the invention are not affected by the water wash, indicating no wandering at coating pH, but are fully solubilized for removal and/or decolorization by the photographic processing to which they were subjected.

Synthesis Example 10

Preparation of Dye 1

1-(4-Carboxyphenyl)-4-(4-dimethylamino-cinnamylidene)-3-methyl-2-pyrazolin-5-one

1-(4-Carboxyphenyl)-3-methyl-2-pyrazolin-5-one (2.18 g, 0.010 mol), 4-dimethylaminocinnamaldehyde (1.75 g, 0.010 mol) and glacial acetic acid (10 ml) were mixed together to form a slurry. It was heated to reflux with stirring, held at reflux for five minutes and then cooled to room temperature. EtOH (20 ml) was added to the reaction mixture, which was heated again to reflux, held there for five minutes, and cooled to room temperature. The product was isolated by filtration, washed in succession with ethanol and ligroin, and dried. The reaction was repeated twice on the same scale and the products obtained were all combined. They were treated further by first slurrying in refluxing. EtOH (150 ml), isolating the solid by filtration while hot, and then slurrying in refluxing MeOH (200 ml) and isolating it again, while hot, by filtration. The mp was 282-284°C. The NMR and IR spectra were consistent for the structure assigned. The C,H, and N elemental analyses were in agreement with those calculated for the empirical formula of the dye.

EXAMPLES 24-43

Procedure for Preparation of the Solid Particle Dye Dispersions

Dyes from Table I, VII, and VIII were subjected to ball-milling according to the following procedure. Water (21.7 ml) and a 6.7% solution of Triton X-200® surfactant (TX-200®) (2.65 g) (available from Rohm & Haas) were placed in a 60 ml screw-capped bottle. A 1.00 g sample of dye was added to this solution. Zirconium oxide (ZrO) beads (40 ml) (2 mm diameter) were added and the container with the cap tightly secured was placed in a mill and the contents were milled for four days. The container was removed and the contents added to a 12.5% aqueous gelatin (8.0 g). The new mixture was placed on a roller mill for 10 minutes to reduce foaming and the resulting mixture was then filtered to remove the ZrO beads.

Coating procedure

A spreading agent, surfactant 10G®, and a hardener (bis(vinyl-sulfonylmethyl)ether) were added to the dye-gelatin melt prepared as described in the preparation of the solid particle dye dispersions. A melt prepared from the latter mixture was then coated on polyethylene terephthalate support to achieve a dye coverage of 0.32 g/m$^2$, gelatin coverage of 1.60 g/m$^2$, a spreading agent level of 0.096 g/m$^2$ and a hardener level of 0.016 g/m$^2$. Spectral data were obtained from an analysis of the coatings on a spectrophotometer interfaced with a computer. A summary of the data obtained is in Table XIII. All absorption maxima and half band width (HBW) data are expressed in nanometers (nm). Three sets of absorption data are presented: λ-max and HBW of the coating containing the ball-milled dispersion of the dye, λ-max and HBW of the same coating at pH 10, the pH at which the chromophore is fully ionized, and λ-max and HBW of the dye in methanol solution.

In addition to the data in Table XIII, absorption spectra of the coatings for dyes 1, 55-58, 61, and 65 were made. Comparison of the curves of coatings containing a solid particle dispersion of a particular dye with the same dye in a coating at pH 10 showed the solid particle dispersion absorbance maximum was shifted compared to the solution spectra. This provides an unexpected advantage for use as a filter dye.

Referring to Table XIII, it is clear that the absorption spectra of the coatings containing the solid particle dye dispersion are broader than for the same dyes in solution or in coatings at pH 10. Thus, solid particle dispersions of the dyes of the invention are suitable for filter applications where broad visible light filtration is required. This broad' absorption also serves to reduce the number of dyes needed for a particular filter application.

Table XIII

| Dye | Solid Particle Coating | | Coating (pH 10) | | Solution | |
|---|---|---|---|---|---|---|
| | λ-max | HBW | λ-max | HBW | λ-max | HBW |
| 56 | 444 | 145 | 441 | 135 | 466 | 90 |
| 57 | 493 | 173 | 453 | 112 | 471 | 84 |
| 58 | 507 | 133 | 459 | 122 | 475 | 70 |
| 59 | 499 | 195 | 489 | 100 | 508 | 67 |
| 60 | 461 | 150 | 421 | 110 | 430 | 91 |
| 61 | 551 | 125 | 437 | 110 | 457 | 91 |
| 62 | 494 | 130 | 467 | 101 | 475 | 75 |
| 63 | 488 | 127 | 467 | 104 | 477 | 78 |
| 64 | 470 | 183 | 423 | 89 | 420 | 86 |
| 65 | 486 | 137 | 427 | 99 | 434 | 98 |
| 1 | 480 | 210 | 462 | 139 | 516 | 130 |
| 66 | 428 | 151 | – | – | 420 | 86 |
| 67 | 488 | 211 | – | – | 573 | 116 |
| 68 | 501 | 192 | – | – | 502 | 71 |
| 69 | 506 | 98 | – | – | 512 | 64 |
| 70 | 491 | 176 | – | – | 507 | 64 |
| 71 | 493 | 161 | – | – | 477 | 90 |
| 72 | 437 | 91 | – | – | 506 | 64 |
| 55 | 477 | 124 | 482 | 108 | 500 | 70 |
| 47 | 505 | 129 | 492 | 89 | 502 | 66 |

EXAMPLES 44-49

Dye Immobilization in Coating and Removal During Processing

The coated solid particle dye dispersions prepared as described in the previous examples were evaluated for dye mobility. Samples of the coatings were given a five minute distilled water wash. The results for four of the dyes, 56, 57, 58 and 60, are shown in Table XIV. The coatings were also evaluated for post processing stain following processing in the Kodak Prostar® processor used commercially to process microfilm, subjecting the elements to a development step at a pH of 11.4 for 30 seconds. These results are also included in Table XIV.

Table XIV

| Dye | Before | Optical Density After $H_2O$ Wash | After Prostar |
|---|---|---|---|
| 56 | 2.255 | 2.292 | 0.007 |
| 57 | 1.782 | 1.795 | 0.010 |
| 58 | 1.440 | 1.451 | 0.007 |
| 60 | 1.403 | 1.383 | 0.013 |
| Comp.* | 1.43 | 0.01 | 0.01 |

*Comp. is a comparison dye of the structure:

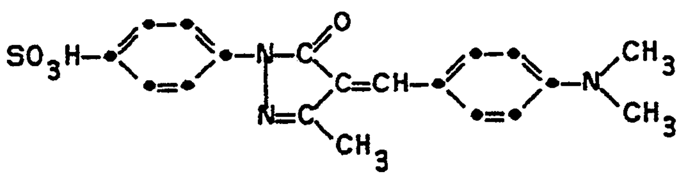

which exhibited a λ-max of 450 nm and a bandwidth of 117 nm before any washing or processing.

Table XIV shows that no dye density was lost by the dyes dispersed and coated as described in the previous examples due to the distilled water wash. This shows that there was no dye wandering from layer to layer. The comparison dye, on the other hand, exhibited severe washout, indicating a high degree of dye wandering.

Table XIV also demonstrates dramatically the complete removal of the solid particle dispersion dyes on Prostar® processing at room temperature. No residual stain is left. The same results were observed when the coatings were processed with Kodak X-Omat® processing, which is used commercially to process x-ray film, subjecting the elements to a development step at a pH of 10.3 for 30 seconds. This is an improvement over other known latex imbibed yellow filter dyes which are incompletely removed by these processing conditions.

For Examples 48 and 49, solid particle dispersions of Dyes 10 and 11 were coated as with Examples 44-47, and subjected to a 5-minute distilled water wash and processed with Kodak E-6® processing, as described in British Journal of Photography Annual, 1977, pp. 194-97. The results are presented in Table XV.

Table XV

| Dye | R | Before | Optical Density After $H_2O$ Wash | After E-6® |
|---|---|---|---|---|
| 10 | H | 1.04 | 1.26 | 0.01 |
| 11 | $CH_3$ | 1.72 | 1.66 | 0.01 |
| Comp.* | — | 1.43 | 0.01 | 0.01 |

*Comp. is the same comparison dye as was identified for Table XIV.

Dye 10 had a λ-max of 449 nm and a bandwidth of 121 nm before washing or processing. Dye 11 had a λ-max of 453 nm and a bandwidth of 97 nm before washing or processing. The results in Table XV indicate that the photographic compositions containing the solid particle dispersions of dyes 10 and 11 do not wander during the water wash, but decolorize completely after photographic processing. The comparison dye, however, washes out during the water wash, indicating severe wandering.

Example 50

Evaluation of Dyes of the Invention in Antihalation Layers in Combination With Other Dyes

The utility of solid particle dyes of this invention, in combination of other dyes, is illustrated with dyes 56 and 60. The dispersions were prepared as in examples 24-43. These dispersions were each coated as a component of an antihalation layer in a multilayer format, along with a cyan filter dye, bis[1-(4-carboxyphenyl)-3-methyl-2-pyrazolin-5-one-(4)]pentamethineoxonol. The coatings, 1 to 4 in Table XXI, were evaluated for dye stain after processing. The emulsion layer was a chemically and spectrally sensitized 0.25 micron cubic silver bromoiodide (3% iodide) emulsion layer coated to achieve silver coverage of 1.45 g/m$^2$ and gelatin coverage of 1.56 g/m$^2$. The gelatin coverage in the antihalation layer was 1.88 g/m$^2$. The levels of dyes 56 and 60 and of the cyan dye are indicated in Table XVI. The gelatin coverage in the overcoat layer was 1.56 g/m$^2$. The coatings were exposed to a tungsten light source in a sensitometer, developed, fixed and washed in the Kodak Prostar® process and dried.

Table XVI

| Coating No. | Dye | Level g/m$^2$ | Cyan Level |
|---|---|---|---|
| 1 | 56 | 0.11 | 0.11 |
| 2 | 56 | 0.16 | 0.16 |
| 3 | 60 | 0.11 | 0.11 |
| 4 | 60 | 0.16 | 0.16 |

The coatings containing solid particle dispersions of dyes 56 and 60 and the cyan filter dye, at the levels shown in Table XVI, exhibited no residual dye stain and provided significantly high light absorption.

**Claims**

1. A photographic element comprising a support and a radiation-sensitive layer, characterized in that at least one layer of the element comprises a dispersion of solid particles of a filter dye having the formula:

$$[D-(A)_y]-X_n$$

where D is a chromophoric light-absorbing moiety, which comprises an aromatic ring when y is 0, and which may or may not comprise an aromatic ring when y is not 0,

A is an aromatic ring bonded directly or indirectly to D,

X is a sulfonamido group, either on A or on an aromatic ring portion of D, with an ionizable proton that causes the dye to exhibit a pKa of 4 to 11 in a 50/50 mixture on a volume basis of ethanol and water,

y is 0 to 4, and

n is 1 to 7, said dye having a log partition coefficient of from 0 to 6 when in the nonionized form.

2. A photographic element according to Claim 1 wherein -X represents $-NHSO_2R$ where R is a substituted or unsubstituted alkyl group of 1 to 6 carbon atoms.

3. A photographic element according to Claims 1-2 wherein said particles are dispersed in a polymeric binder.

4. A photographic element according to Claim 3 wherein said polymeric binder is a hydrophilic colloid.

5. A photographic element according to Claims 1-4 wherein said dispersion of solid particles has a mean diameter of less than 10 nm.

6. A photographic element according to Claims 1-4 wherein said dispersion of solid particles has a mean diameter of less than 1 nm.

**Patentansprüche**

1. Photographisches Element mit einem Träger und einer strahlungsempfindlichen Schicht, dadurch gekennzeichnet, daß mindestens eine Schicht des Elementes eine Dispersion von festen Teilchen eines

Filterfarbstoffes der Formel:

$$[D-(A)_y]-X_n$$

enthält, in der bedeuten:

D einen chromophoren Licht absorbierenden Rest, der einen aromatischen Ring aufweist, wenn y gleich 0 ist und der einen oder keinen aromatischen Ring aufweist, wenn y nicht gleich 0 ist,

A einen aromatischen Ring, der direkt oder indirekt an D gebunden ist,

X eine Sulfonamidogruppe, die entweder an A oder an einen aromatischen Ringteil von D gebunden ist, mit einem ionisierbaren Proton, das bewirkt, daß der Farbstoff in einer Mischung aus 50 teilen Ethanol und 50 Teilen Wasser auf Volumenbasis einen pKa-Wert von 4 bis 11 aufweist,

y gleich 0 bis 4 und

n gleich 1 bis 7.

2. Photographisches Element nach Anspruch 1, in dem -X für $-NHSO_2R$ steht, worin R die Bedeutung einer substituierten oder unsubstituierten Alkylgruppe mit 1 bis 6 Kohlenstoffatomen hat.

3. Photographisches Element nach Ansprüchen 1 bis 2, in dem die Teilchen in einem polymeren Binder dispergiert sind.

4. Photographisches Element nach Anspruch 3, in dem der polymere Binder ein hydrophiles Kolloid ist.

5. Photographisches Element nach Ansprüchen 1 - 4, in dem die festen Teilen der Dispersion einen mittleren Durchmesser von weniger als 10 nm aufweisen.

6. Photographisches Element nach Ansprüchen 1-4, in dem die festen Teilchen der Dispersion einen mittleren Durchmesser von weniger als 1 nm aufweisen.

## Revendications

1. produit photographique comprenant un support et une couche sensible au rayonnement, caractérisé en ce qu'au moins une couche du produit comprend une dispersion de particules solides d'un colorant filtre de formule :

$$[D-(A)_y]-X_n$$

où D est un groupement chromophore absorbant la lumière qui comprend un noyau aromatique quand y est 0, et qui peut comprendre ou non un noyau aromatique quand y n'est pas 0,

A est un noyau aromatique rattaché directement ou indirectement à D,

X est un groupe sulfonamido, soit sur A soit sur une portion du noyau aromatique de D, avec un proton ionisable qui procure un pKa compris entre 4 et 11 dans un mélange 50/50 en volume d'eau et d'éthanol,

y est compris entre 0 et 4, et

n est compris entre 1 et 7, ledit colorant ayant un logarithme du coefficient de partage compris entre 0 et 6 quand il est sous forme non-ionisée.

2. Produit photographique selon la revendication 1, dans lequel -X représente $-NHSO_2R$ où R est un groupe alkyle substitué ou non de 1 à 6 atomes de carbone.

3. produit photographique selon les revendications 1 et 2 dans lequel les particules sont dispersées dans un liant polymère.

4. produit photographique selon la revendication 3, dans lequel le liant polymère est un colloïde hydrophile.

5. produit photographique selon les revendications 1 à 4 dans lequel la dispersion de particules solides a un diamètre moyen inférieur à 10 nm.

6. produit photographique selon les revendications 1 à 4 dans lequel la dispersion de particules solides a un diamètre moyen inférieur à 1 nm.